(19) Europäisches Patentamt / European Patent Office / Office européen des brevets

(11) **EP 3 315 571 B1**

(12) **EUROPEAN PATENT SPECIFICATION**

(45) Date of publication and mention
of the grant of the patent:
**06.05.2020 Bulletin 2020/19**

(21) Application number: **16814504.3**

(22) Date of filing: **24.06.2016**

(51) Int Cl.:
*C09D 201/00* (2006.01)  *B05D 5/08* (2006.01)
*B05D 7/24* (2006.01)  *C09D 5/02* (2006.01)
*C09D 5/16* (2006.01)  *F21V 3/04* (2018.01)
*G08G 1/095* (2006.01)  *G09F 7/00* (2006.01)

(86) International application number:
**PCT/JP2016/068871**

(87) International publication number:
**WO 2016/208735 (29.12.2016 Gazette 2016/52)**

(54) **COATING FILM**

BESCHICHTUNGSFILM

FILM DE REVÊTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2015 JP 2015127879**

(43) Date of publication of application:
**02.05.2018 Bulletin 2018/18**

(73) Proprietor: **Asahi Kasei Kabushiki Kaisha
Tokyo 100-0006 (JP)**

(72) Inventors:
• **ISEDA, Kazuya**
**Tokyo 101-8101 (JP)**
• **YAMANE, Michiyo**
**Tokyo 101-8101 (JP)**
• **TAKANOHASHI, Hiroaki**
**Tokyo 101-8101 (JP)**
• **HIROSE, Junichi**
**Tokyo 101-8101 (JP)**

(74) Representative: **Strehl Schübel-Hopf & Partner
Maximilianstrasse 54
80538 München (DE)**

(56) References cited:
**EP-A2- 0 352 804**        **WO-A1-2009/067414**
**WO-A1-2014/097309**  **JP-A- 2001 106 973**
**JP-A- 2001 131 480**    **JP-A- 2009 255 490**
**JP-A- 2011 111 533**    **JP-A- 2014 205 736**

**Description**

Technical Field

The present invention relates to a coating film, a process for producing the coating film, use of a coating composition, a functional member, an LED signal, an LED headlamp, a lens for an LED, a headlamp, and a display board for outdoor use.

Background Art

A technique for coating a member to be used outdoors, such as automobiles and roof materials, with a coating agent containing an organic-inorganic composite material as an ingredient in order to impart an antifouling property (self-cleaning) is known (see, for example, Patent Literatures 1 and 2).

In addition, snow accretion onto a signal, an electric cable, a train, a bridge beam, an iron tower, a vehicle, an aircraft, a telecommunication plant, a road traffic sign, a sound insulation wall, a roof and a side wall of a building, an inner wall of a snow-flowing gutter, a snow-throwing port, or the like in a snow-covered area is a problem. As a countermeasure to prevent the snow accretion, the use of a heating element such as a heater is an effective measure, but the addition of facilities is not preferable from an economical viewpoint, and the installment and maintenance of facilities are extremely troublesome.

For example, various methods for coating a base material with a water-repellent paint containing a fluororesin or the like as the main component are proposed as a method for preventing snow accretion (see, for example, Patent Literatures 3 to 9).

Citation List

Patent Literature

Patent Literature 1: International Publication No. WO 2007069596
Patent Literature 2: International Publication No. WO 2010104146
Patent Literature 3: Japanese Patent Laid-Open No. 7-331122
Patent Literature 4: Japanese Patent Laid-Open No. 9-279056
Patent Literature 5: Japanese Patent Laid-Open No. 10-88061
Patent Literature 6: Japanese Patent Laid-Open No. 11-29722
Patent Literature 7: Japanese Patent Laid-Open No. 2002-370317
Patent Literature 8: Japanese Patent Laid-Open No. 2011-148288
Patent Literature 9: Japanese Patent Laid-Open No. 2002-180035

WO 2014/097309 A1, WO 2009/067414 A1 and EP 0352 804 A2 disclose a coating film comprising a metal oxide and a polymer particle.

Summary of Invention

Technical Problem

However, with the coating films described in Patent Literatures 1 and 2, at least a problem occurs to a member to be used outdoors, such as a headlamp for automobiles, that the coating film used for the member is peeled because of frequent chances for the member to come into contact with other members. Facing the peeling of the coating film, further excellent adhesiveness has been desired for coating films. Therefore, a coating film that has further better adhesiveness than in the conventional techniques and has an antifouling property is desired.

On the other hand, with the coating films described in Patent Literatures 3 to 9, which describe a technique for preventing snow accretion, at least it is difficult to impart the antifouling property (self-cleaning) because of repelling of rain drops by the coating films. Therefore, a coating film having both a snow sliding property and an antifouling property is also desired.

In addition, a higher snow accretion-preventing property is desired for members installed at a nearly horizontal, low angle, such as a roof of a building and a photovoltaic power generation panel, than for members from which the snow that has accreted can be expected to drop (by gravity) relatively easily, such as a road traffic sign and a sound insulation wall. However, a coating film that can meet such a high level of snow sliding property has not been proposed.

Further, the characteristics of snow are different depending on the area or season in which the members are used. For example, there is a big difference between wet snow that contains a large amount of water and powder snow that contains a small amount of water as to how easily the snow itself accretes. It is possible to change coating films according to the area; however, it is difficult to change coating films according to the season, and therefore a coating film that can impart to a member the snow sliding property independent of the characteristics of snow is desired.

Besides, particularly in recent years, problems that snow accretion gets worse in signals, headlamps, lenses, headlamps for automobiles, and display boards for outdoor use in which the LED is used have occurred because the temperature at the surface of each member is lower than that in the case where a conventional light source is used. For these particular members, a coating film that can impart a higher level of snow sliding property is desired.

Therefore, an object of the present invention is to provide a coating film that is excellent in the antifouling property and the adhesiveness.

Solution to Problem

The present inventors have conducted diligent studies to solve the problems of the conventional techniques to find that a coating film containing a metal oxide and a polymer particle and having a ten-point average roughness (Rz) within a particular range is excellent in the antifouling property and the adhesiveness, and have completed the present invention.

That is, the present invention is as follows.

[1] A coating film comprising:

a metal oxide;
a polymer particle, and
an alkoxysilane
wherein the metal oxide is a silica and the coating film has a ten-point average roughness, determined in accordance with JIS B 0601(1994), of 5 nm or more and 300 nm or less.

[2] The coating film according to [1], wherein the coating film has an arithmetic average roughness, determined in accordance with JIS B 0601(1994), to the ten-point average roughness of 0.0 or more and 3.0 or less.

[3] The coating film according to [1] or [2], wherein the coating film has a water contact angle of 40° or less.

[4] The coating film according to any of [1] to [3], wherein a coating film surface has an abundance of a hydroxy group of 0.03 or more and 0.2 or less.

[5] The coating film according to any of [1] to [4], wherein the coating film has a porosity of less than 20%.

[6] The coating film according to any of [1] to [5], wherein the metal oxide has an average particle diameter of 1.0 nm or larger and 400 nm or smaller.

[7] The coating film according to any of [1] to [6], wherein the polymer particle has an average particle diameter of 10 nm or larger and 800 nm or smaller.

[8] The coating film according to any of [1] to [7], wherein the coating film is obtained by coating at least one surface of a base material with a coating composition comprising the metal oxide and a polymer-emulsion-particle and then drying the coating composition.

[9] The coating film according to any of [1] to [8], wherein the coating film is in direct contact with a base material and comprising at least one intermediate layer on a surface being in direct contact with the base material.

[10] The coating film according to [9], wherein the intermediate layer comprises at least one selected from the group consisting of urethane resins, acrylic urethane resins, cationic resins, and acrylic silicone resins.

[11] The coating film according to [9], wherein:

the intermediate layer comprises a hard coat layer; and
the hard coat layer comprises the metal oxide.

[12] The coating film according to [11], wherein the hard coat layer further comprises a multifunctional silane having 3 to 20 atomic groups represented by formula (1) in one molecule:

$$R^1_n SiX_{3-n}A-  \qquad (1);$$

wherein:

$R^1$ represents hydrogen, or an alkyl group, alkenyl group, or alkynyl group having 1 to 10 carbon atoms, or an aryl group, and further, these substituents each optionally have a halogen group, a hydroxy group, a mercapto group, an amino group, a (meth)acryloyl group, or an epoxy group;
X represents a hydrolyzable group;
n is an integer of 0 to 2; and
A represents a moiety comprising 2 to 20 methylene groups, optionally comprising a substituent on the methylene groups.

[13] The coating film according to any of [1] to [12] for snow accretion-preventing use or antifogging use.
[14] A process for producing the coating film according to any of [1] to [13], the process comprising:

a coating step of conducting coating with a coating composition comprising a metal oxide, an alkoxy silane and a polymer-emulsion-particle, wherein the metal oxide is a silica;
a drying step of conducting drying at 5.0°C or higher and 80°C or lower; and
an aging step of conducting aging under an environment of 30°C or higher and 150°C or lower and a humidity of 40%RH or higher and 100%RH or lower.

[15] The process for producing the coating film according to [14], wherein the coating step is a step of conducting coating by a spray coating method, or a step of coating both surfaces of a base material simultaneously by a DIP coating method.
[16] Use of a coating composition comprising a metal oxide which is a silica, an alkoxysilane and a polymer-emulsion-particle, the use being for imparting a snow accretion-preventing property.
[17] A functional member comprising:

a base material; and
the coating film according to any of [1] to [13] on the base material.

[18] The functional member according to [17], for use of setting an installation angle at 10° or more and 140° or less to a ground surface.
[19] The functional member according to [17] or [18], wherein the base has a non-planar shape.
[20] A member for outdoor use comprising the functional member according to any of [17] to [19] and selected from the group consisting of an LED signal, an LED headlamp, a lens for an LED, a headlamp, and a display board for outdoor use.

Advantageous Effects of Invention

The coating film according to the present invention is excellent in the antifouling property and the adhesiveness.

Brief Description of Drawings

[Figure 1] Figure 1 illustrates an F-h curve for describing an elastic recovery ratio and the maximum indentation according to the present embodiment.
[Figure 2] Figure 2 illustrates an F-h curve showing results obtained by subjecting a coating film of Production Example 1 to a micro-hardness test.
[Figure 3] Figure 3 illustrates an F-h curve showing results obtained by subjecting a coating film of Production Example 9 to a micro-hardness test.

Description of Embodiments

Hereinafter, embodiments for carrying out the present invention (hereinafter, referred to as "present embodiments") will be described in detail. The present embodiments below are examples for describing the present invention and are not intended to limit the present invention to the contents below. The present invention can be modified to be carried out appropriately within the gist thereof.

[Coating Film]

A coating film according to the present embodiment contains a metal oxide and a polymer particle and having a ten-point average roughness (hereinafter, also referred to as "ten-point average roughness (Rz)") of 5 nm or more and 300 nm or less. When the metal oxide and the polymer particle are contained, the coating film is excellent in the snow-sliding property and in the crack resistance of the coating film against differences in heat and cool. Further, when the ten-point average roughness (Rz) is 5 nm or more and 300 nm or less, the coating film is excellent in the balance among the antifouling property, the antifogging property, and the adhesiveness.

The coating film has a ten-point average roughness (Rz) of 5 nm or more and 300 nm or less. When the ten-point average roughness (Rz) is in the range, the coating film is excellent in the adhesiveness and the antifouling property. The ten-point average roughness (Rz) is preferably 20 nm or more and 300 nm or less, more preferably 20 nm or more and 200 nm or less, and still more preferably 40 nm or more and 120 nm or less. When the ten-point average roughness (Rz) is 5 nm or more, the snow sliding property is excellent even at low temperatures, and when the ten-point average roughness (Rz) is 300 nm or less, the snow sliding property at low angles is excellent.

The ten-point average roughness (Rz) can be controlled by the particle diameter and aspect ratio of the metal oxide and of the polymer particle and the content ratio of the metal oxide and the polymer particle, which will be mentioned later. In addition, the ten-point average roughness (Rz) can also be controlled by controlling various conditions in the method for controlling a high-order structure between the metal oxide and the polymer-emulsion-particle by making a nano-composite material between the metal oxide and the polymer-emulsion-particle or by blending a third component (alkoxysilanes which will be mentioned later) in a coating composition with which coating is conducted in order to form a coating film, the method for mixing the metal oxide and the polymer-emulsion-particle, the method for controlling the rate of hydrolysis of alkoxysilanes, and the drying step and aging step in the process for producing the coating film. When the metal oxide or the polymer-emulsion-particle having a large (number) average particle diameter, there is a tendency that the ten-point average roughness (Rz) becomes large.

The ten-point average roughness (Rz) is 5 nm or more and 300 nm or less also from the viewpoint of improving the snow sliding property. It can be inferred that snow particles, when accrete onto the surface of the coating film, melt at the interface and thereafter are fused again, thereby disturbing the sliding property of the snow. On the premise of this inference, the action mechanism of the present embodiment is considered as follows (however, the action mechanism is not limited to the following). The coating film according to the present embodiment suppresses the melting of snow particles at the interface of the coating film and the snow by controlling at least the ten-point average roughness (Rz) of the coating film because the contact area between the snow particles that have accreted and the coating film is made extremely small. In addition, the coating film according to the present embodiment allows the melted snow particles to flow and drop immediately to improve the snow sliding property because water adsorbed to the coating film surface is hard to freeze even at a low temperature from the reason that: the coating film according to the present embodiment has an extremely large surface area; there are a large number of hydrophilic functional groups at the surface of the coating film; a low-molecular-weight component containing an N atom exists; and other reasons.

As the physical properties of the surface roughness, the arithmetic average roughness is also known in addition to the ten-point average roughness. It is preferable that the coating film according to the present embodiment have an arithmetic average roughness (hereinafter, also referred to "arithmetic average roughness (Ra)") of 5 nm or more and 100 nm or less, more preferably 5 nm or more and 60 nm or less, and still more preferably 5 nm or more and 20 nm or less. When the arithmetic average roughness is in the range, there is a tendency that the melting of snow particles is suppressed. The coating film having an arithmetic average roughness in the range can be obtained, for example, by adjusting the particle diameter and aspect ratio of the metal oxide and of the polymer particle, or by controlling the conditions in the drying step.

The surface roughness in terms of the ten-point average roughness and of the arithmetic average roughness can be obtained by the methods described in Examples, which will be mentioned later.

It is preferable that a ratio of the arithmetic average roughness (Ra) to the ten-point average roughness (Rz) be 0.0 or more and 3.0 or less, more preferably 0.01 or more and 2.0 or less, still more preferably 0.02 or more and 0.5 or less, and even still more preferably 0.07 or more and 0.1 or less. When (Ra/Rz) is in the range, there is a tendency that the melting of snow particles is suppressed. To obtain the coating film having (Ra/Rz) in the range, the methods for controlling Rz and Ra may be combined.

It is preferable that the coating film have a water contact angle of 40° or less, more preferably 30° or less, and still more preferably 20° or less from the viewpoint of improving the snow sliding property. The water contact angle can be measured by the method described in Examples, which will be mentioned later.

The coating film according to the present embodiment has a snow sliding property and therefore is suitable for preventing snow accretion. In addition, to be used for preventing snow accretion, the coating film is preferably included in functional members, which will be mentioned later, to be used.

The coating film according to the present embodiment can control the amount of change in haze, which will be mentioned later, to be a predetermined value or less and therefore is suitable for antifogging use. In addition, to be used for antifogging use, the coating film is preferably included in functional members, which will be mentioned later, to be used.

It is preferable that the coating film surface have an abundance of a hydroxy group of 0.03 or more and 0.2 or less, more preferably 0.05 or more and 0.1 or less, and still more preferably 0.06 or more and 0.08 or less from the viewpoint of improving the snow sliding property. The abundance of the hydroxy group at the coating film surface here means the concentration ratio of fluorine and silicon obtained by conducting XPS measurement after reacting SiOH that exists at the coating film surface with a fluorine compound. Specifically, the abundance of the hydroxy group at the coating film surface can be measured by the method described in Examples, which will be mentioned later.

It is preferable that the coating film have a porosity of less than 20%, more preferably 15% or less, and still more preferably 10% or less from the viewpoint of improving the snow sliding property. The porosity % here is defined as follows.

$$\text{Porosity (\%)} = (1.46 - (\text{refractive index of film at}$$
$$550 \text{ nm}))/0.46 \times 100 \quad \ldots (2)$$

The refractive index in expression (2) is determined by measuring the reflectance at each wavelength in a wavelength range from 230 to 800 nm using a reflection spectroscopic film thickness meter (manufactured by Otsuka Electronics Co., Ltd., model: FE-3000) and measuring the refractive index of a glass base material from the back side of the glass base material using the reflection spectroscopic film thickness meter. Further, the intensity of lights reflected from the glass base material and the film to interfere with each other is measured from the film side at 2-nm intervals between 230 nm and 800 nm, and by computationally searching the refractive index and film thickness of the film using the refractive index of the glass base material measured in the wavelength range and the intensity of reflected lights interfering with each other, fitting to the measured values is conducted by a least-squares method to obtain the refractive index of the film and film thickness (nm). The refractive index of 1 is used for air, and the refractive index of 1.46 is used for silica.

<Metal Oxide>

In the metal oxide according to the present embodiment, an oxide of a metal is formed in a particle form. The metal oxide is silica (silicon oxide). The particle form here also includes metal oxides having an aspect ratio of 3.0 or more, which will be mentioned later.

It is preferable that the metal oxide have an average particle diameter of 1.0 nm or larger and 400 nm or smaller, more preferably 1.0 nm or larger and 100 nm or smaller, still more preferably 1.0 nm or larger and 50 nm or smaller, and even still more preferably 1.0 nm or larger and 10 nm or smaller. When the number average particle diameter of the metal oxide is adjusted in the range, there is a tendency that the surface roughness, such as the ten-point average roughness, obtained when the coating film is made can be controlled. To obtain the metal oxide in a range of 1.0 nm or larger and 100 nm or smaller, the average particle diameter may be controlled, for example, by combining a plurality of commercially available metal oxides whose average particle diameters are already known. In addition, the average particle diameter of the metal oxide can also be controlled, for example, by using a sieve whose size of the opening is already known.

The average particle diameter of the metal oxide here means an average particle diameter in terms of primary particle diameters in the case where the metal oxide exists in the form of a primary particle and an average particle diameter in terms of diameters of aggregates (secondary particle diameters) in the case where the metal oxide exists in the form of an aggregate. In addition, the average particle diameter can be determined by the following method.

That is, the metal oxide is photographed with a transmission type microscope (TEM) after adjusting the microscope so that 100 to 200 metal oxide particles can be photographed. The particle diameter (average diameter of two axes, namely, average value of minor axis diameters and major axis diameters) of the metal oxide existing in the photograph taken is measured to work out the average value of particle diameters of the respective measured particles. The average value of the particle diameters of respective particles can be used as the average particle diameter of the metal oxide.

The aspect ratio of the metal oxide (ratio of major axis diameter to minor axis diameter) is not particularly limited but may be 3.0 or more. Examples of the metal oxide include: a composite particle in which primary particles that are (fine) particles are connected like a rosary; a fibrous particle; a needle-like particle; a plate-like particle; and a hollow particle thereof.

<Polymer Particle>

Examples of the polymer for the polymer particle include, but not limited to, polyurethane-based polymers, polyester-based polymers, poly(meth)acrylate-based polymers, and poly(meth)acrylate-silicone-based copolymers. Among these, poly(meth)acrylate-silicone-based copolymers are preferable. In addition, core-shell type polymer particles are preferable among the polymer particles, and a polymer particle containing: a silicone-based polymer as the main component of the core; and, as a component of the shell, a poly(meth)acrylate-silicone-based copolymer in which an acrylamide is copolymerized is preferable.

It is preferable that the polymer particle have an average particle diameter (number average particle diameter of primary particles) of 3.0 nm or larger and 800 nm or smaller, more preferably 5.0 nm or larger and 800 nm or smaller, and still more preferably 10.0 nm or larger and 800 nm or smaller. When the average particle diameter of the polymer particle is adjusted in the range, there is a tendency that the surface roughness, such as the ten-point average roughness, of the coating film can be controlled. The average particle diameter of the polymer particle is even still more preferably 10.0 nm or larger and 100 nm or smaller, further still more preferably 20 nm or larger and 90 nm or smaller, and particularly preferably 25 nm or larger and 50 nm or smaller. To obtain the polymer particle having an average particle diameter in the range, the number average particle diameter of the polymer-emulsion-particle, which will be mentioned later, may be controlled. The average particle diameter of the polymer particle can be measured by the method described in Examples, which will be mentioned later.

It is preferable that the average particle diameter of the metal oxide be smaller than the average particle diameter of the polymer particle from the viewpoint of controlling the surface roughness such as the ten-point average roughness in a desired range. In addition, the number of particles (nB) of the polymer particle and the number of particles (nA) of the metal oxide preferably satisfies the relation of nB<nA, more preferably satisfies the relation of (nA/nB)>1.2. The number of particles (nA) and the number of particles (nB) can be calculated from the specific gravity, the particle diameter, and the mass of each particle. Specifically, the number of particles can be calculated from the expression: the number of particles in 1 g of the total mass of the particle $d = \{(1/\alpha)/(4/3 \times \pi)\} \times 10^{21}$ particles, provided that the particle diameter is d, and specific weight is $\alpha$.

Part of the polymer particles here may be covered by a component that constitutes the metal oxide or a component that will be described later. It is preferable that a portion of the surface of the polymer particle be covered with the metal oxide and subsequently covered with a different metal oxide from the viewpoint of controlling the surface roughness in an intended range. In the case where the same kind of metal oxide is used, the metal oxide having a different particle diameter can be used.

<Base Material>

It is preferable that the coating film according to the present embodiment be provided with a base material in order to fix the coating film in a desired shape. It is preferable that the coating film be obtained by coating at least one surface of the base material with the coating composition containing the metal oxide and the polymer-emulsion-particle, which will be mentioned later, and then drying the coating composition. Examples of the component of the base material include, but not limited to, metals, resins, and combinations thereof. Specific examples of the resins, include, but not limited to, polycarbonate, polymethyl methacrylate, polyethylene terephthalate, ABS resins, and composite products thereof. Among these, polycarbonate is preferable from the viewpoint of the strength of the base material.

Examples of the shape of the base material include, but not limited to, a flat plate form, a non-flat plate form, a curved surface, an uneven shape, and combinations thereof.

The coating film is a coating film being in direct contact with the base material, and it is preferable that the coating film further include at least one intermediate layer on the surface being in direct contact with the base material from the viewpoint of adhesiveness and crack resistance against differences between heat and cool. The intermediate layer means a layer positioned between the outermost surface layer of the coating film and the base material

Examples of the component contained in the intermediate layer include, but not limited to, acrylic emulsion resins, styrene emulsion resins, acrylic styrene emulsion resins, acrylic silicone emulsion resins, silicone emulsion resins, urethane resins, urethane emulsion resins, acrylic urethane resins, acrylic silicone resins, and cationic resins. Among these, it is preferable that the intermediate layer contain at least one selected from the group consisting of urethane resins, acrylic urethane resins, cationic resins, and acrylic silicone resins from the viewpoint of adhesiveness and flexibility. Urethane emulsion resins are preferable from the viewpoint of adhesiveness. These components of the intermediate layer may be used singly or in a combination of two or more.

Examples of the commercially available anionic type polyurethane resins include, but not limited to, trade names "SUPERFLEX 126", "SUPERFLEX 130", "SUPERFLEX 150", "SUPERFLEX 170", "SUPERFLEX 210", "SUPERFLEX 300", "SUPERFLEX 420", "SUPERFLEX 460", "SUPERFLEX 470", "SUPERFLEX 740", "SUPERFLEX 800", and "SUPERFLEX 860" each manufactured by DKS Co., Ltd.; trade names "NeoRez R-9660", "NeoRez R-972", "NeoRez R-9637", "NeoRez R-9679", "NeoRez R-989", "NeoRez R-2150", "NeoRez R-966", "NeoRez R-967", "NeoRez R-9603", "NeoRez R-940", and "NeoRez R-9403" each manufactured by DMS; trade names "UCOAT UX-485", "UCOAT UWS-145", "PERMALIN UA-368T", "PERMALIN UA-200", and "UPRENE UXA 307" each manufactured by Sanyo Chemical Industries, Ltd.; and trade names "NeoRez R-600", "NeoRez R-650", "NeoRez R-9617", "NeoRez R-9621", and "NeoRez R-9330" each manufactured by Royal DSM N.V. Examples of the commercially available non-ionic type polyurethane particle include, but not limited to, trade names "SUPERFLEX 500M", "SUPERFLEX E 2000", and "SUPERFLEX E 4800" each manufactured by DKS Co., Ltd. Examples of the commercially available cationic type polyurethane particle include, but not limited to, trade names "SUPERFLEX 620" and "SUPERFLEX 650" each manufactured by DKS Co., Ltd.

The coating film according to the present embodiment can include a hard coat layer from the viewpoint of a scratch resistant property. In the case where the ten-point average roughness of the hard coat layer is in the range of the ten-point average roughness (5 nm or more and 300 nm or less), the outermost surface of the coating film may be the hard coat layer. In addition, the intermediate layer in the coating film may include the hard coat layer.

It is preferable that the hard coat layer according to the present embodiment have an elastic recovery ratio $W_{ER}$ of 0.55 or more and a maximum indentation $h_{max}$ of 0.20 $\mu$m or more and 0.50 $\mu$m or less measured by a micro-hardness test. The hard coat layer is configured like this and therefore can achieve both excellent scratch resistance and flexibility by only a single layer and is also excellent in transparency.

[Micro-Hardness Test]

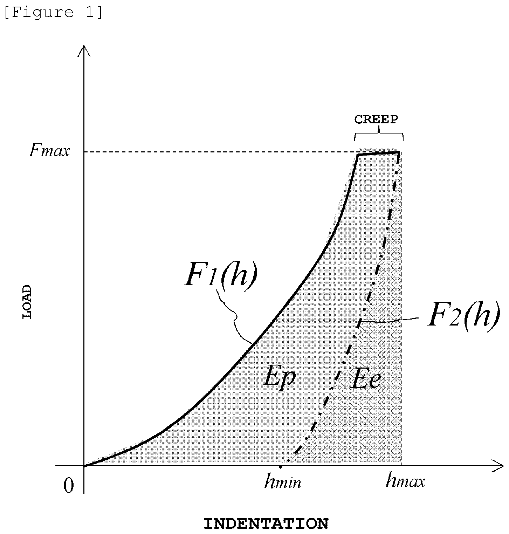

The micro-hardness test in the present embodiment means an indentation test (test conditions; indenter: Vickers quadrangular pyramid diamond indenter, loading condition: 1 mN/20 sec, creep: 5 sec, unloading condition: -1 mN/20 sec, measured load range of 0.4 mN to 1 mN, measuring 200 points at even intervals during loading and during unloading and 10 points at even intervals during creep) using FISCHERSCOPE (model number: H-100CS) manufactured by FISCHER INSTRUMENTS K.K. This micro-hardness test evaluates the difficulty of deformation (hardness) from an area or depth of impression (depression) made by applying a constant load and gives an F (load)-h (indentation) curve as shown in Figure 1. In Figure 1, the energy used for deforming the coating film by $h_{max}$ (initial plastic deformation energy: $E_{p, initial}$) is given by the following expression (3), wherein the indentation of the coating film obtained when the load is applied to the coating film from 0 (zero) to F with an indenter continuously is represented by $h_{max}$, the maximum indentation as referred to in the present embodiment.

$$E_{p, initial} = \int_0^{hmax} F_1(h) \qquad (3)$$

Thereafter, when the amount of deformation returns to $h_{min}$ after the unloading (load of 0), the energy (elastic recovery energy: $E_e$) used while the amount of deformation returns to $h_{min}$ from $h_{max}$ is given by the following expression (4).

$$E_e = \int_{hmax}^{hmin} F_2(h) \qquad (4)$$

Accordingly, the energy $E_p$ eventually used for the plastic deformation in this micro-hardness test is given by the following expression (5).

$$E_p = E_{p, initial} - E_e \qquad (5)$$

The elastic recovery ratio $W_{ER}$ in the present embodiment represents the proportion of the energy used for elastic recovery in the total energy consumed in the micro-hardness test and is given by the following expression (6).

$$W_{ER} = E_e / (E_e + E_p) \qquad (6)$$

Here, the difference between the Martens hardness and Vickers hardness which are conventional indices of the material hardness that can be obtained by the similar indentation test and the elastic recovery ratio and maximum indentation in the present embodiment is described. The Martens hardness is material hardness represented by the load F and the square of the maximum indentation $h_{max}$ in Figure 1 and has a characteristic that the hardness of a material is simply calculated from an indentation test; however, the elasticity/plasticity of the material are not taken into consideration, and therefore even though the indentation is the same in materials when the same load is applied, the difference between a material that thereafter recovers from deformation like rubber and a material that does not recovers thereafter from deformation like soft jelly cannot be distinguished from the Martens hardness.

The Vickers harness is hardness determined from the length of the diagonal line of an impression obtained by observing the size of the impression formed at a coating film surface after an indentation test with a microscope attached to the tester. Although the Vickers hardness is a physical property value in which the elasticity is taken into consideration when compared with the Martens hardness, the plasto-elasticity of the coating film is not necessarily reflected in the results in consideration of the case where $F_2(h)$ is not a linear function, and therefore it can be said that there is room for improvement from the viewpoint of accuracy.

In contrast, when the hardness is evaluated by the elastic recovery ratio and maximum indentation in the present embodiment, even though there are materials similarly having a high elastic recovery ratio, for example, a rubber-like material can be distinguished in the case where the maximum indentation is large, and in the case where the maximum indentation is small, the material is found to be a hard material like a steel metal.

Here, the value of the elastic recovery ratio $W_{ER}$ in the present embodiment which can be taken is $0 \leq W_{ER} \leq 1$, the elastic recovery ratio $W_{ER}$ is 0.55 or more from the viewpoint of not being scratched when the hard coat layer is subjected to shock (namely, scratch resistant property), and the elastic recovery ratio is preferable as the value is larger as long as the value is in the range. More specifically, it is preferable that the elastic recovery ratio $W_{ER}$ be 0.60 or more, more preferably 0.65 or more. In addition, the hard coat film according to the present embodiment have a maximum indentation $h_{max}$ of 0.20 or more and 0.50 or less, preferably a maximum indentation $h_{max}$ of 0.20 or more and 0.40 or less, and still more preferably a maximum indentation $h_{max}$ of 0.25 or more and 0.40 or less from the viewpoint of shock-absorbing ability when subjected to shock.

The hard coat layer can contain a metal oxide. Examples of the metal oxide include the same metal oxides as used for the coating film, and among these, silica is preferable. In addition, the hard coat layer can further contain the same polymer particles and hydrolyzable silicon compounds as used for the coating film.

Specifically, the elastic recovery and maximum indentation of the hard coat layer can be measured by the methods described in Examples, which will be mentioned later. It is to be noted that the elastic recovery ratio and the maximum indentation can be adjusted appropriately, for example, by the crosslink density, the kind of the crosslinking agent, the temperature/time in drying the coating film and in the heat treatment, the amount of the crosslinking agent to be added, the abundance ratio of the metal oxide/the hydrolyzable silicon compound/the polymer particle, the particle diameter of each component, the coating film thickness, and the number of functional groups in the hydrolyzable silicon compound, and the length of the alkyl group, and the like. More specifically, there is a tendency that the value of the elastic recovery ratio is increased, for example, by increasing the composition ratio of the polymer particle to the metal oxide and the hydrolyzable silicon compound, using the multifunctional hydrolyzable silicon compound (hydrolyzable silicon compound: formula (9), which will be mentioned later, is more preferably used than hydrolyzable silicon compound: formula (10), which will be mentioned later), adjusting the number of carbons of $R^2$ in the hydrolyzable silicon compound represented by formula (1), which will be mentioned later, from 1 to 6. In addition, there is a tendency that the value of the "maximum indentation" is decreased by making the particle diameters of the metal oxide and the polymer particle small, increasing the content of the metal oxide, increasing the film thickness of the hard coat layer, increasing the temperature and time of the heat treatment in producing the hard coat layer, or other methods.

It is preferable that the hard coat layer according to the present embodiment have an amount of change in haze described below of 5.0 or less, more preferably 3.0 or less, and still more preferably 1.5 or less from the viewpoint of scratch resistance.

The haze value ($H_0$) of the hard coat film before the steel wool test described below is measured by the method specified in JIS K7136. Further, as the steel wool test, the hard coat film is rubbed by 5 times of reciprocation using steel wool (#0) at a pressure of 130 to 150 $gf/cm^2$ and a speed of about 1 cm/sec. After the powder of the steel wool arising on the surface from the steel wool test is removed, the haze value is measured again ($H_1$). The difference in the haze before and after the steel wool test ($H_1$-$H_0$) is defined as the amount of change in haze.

It is preferable that the hard coat layer according to the present embodiment have a film thickness (thickness) of 200 $\mu$m or less, more preferably 0.1 $\mu$m or more and 200 $\mu$m or less, still more preferably 1 $\mu$m or more and 150 $\mu$m or less, even still more preferably 5 $\mu$m or more and 100 $\mu$m or less, and further still more preferably 5 $\mu$m or more and 50 $\mu$m or less. When the film thickness is in the range of 0.1 $\mu$m or more and 200 $\mu$m or less, there is a tendency that more satisfactory scratch resistance can be exhibited without lowering optical properties. The film thickness of the hard coat film here means a value measured using a publicly known film thickness meter (for example, manufactured by Spectra Coop., item number: MHAA-100W) after the film is left to stand sufficiently in a room at a constant temperature and a constant humidity of 50%RH.

The numerical value of the film thickness of the hard coat layer can be controlled in the range, for example, by controlling the solid content of the coating solution, the WET film thickness in coating, coating speed, and morphology of the components of the coating film.

A tacky adhesive layer formed at least one surface of the hard coat layer according to the present embodiment may further be provided. As the tacky adhesive layer, generally used adhesives can be used. Examples thereof include, but not limited to, thermoplastic resins, thermosetting resins, rubbers/elastomers, and acrylic-based resins, acrylic urethane-based resins, urethane-based resins, silicone-based resins, and the like are preferable. In addition, the adhesive may contain an arbitrary, appropriate additive, if necessary. Examples of the additive include, but not limited to, crosslinking agents, tackifiers, plasticizing agents, pigments, dyes, fillers, anti-aging agents, electrically conductive materials, ultraviolet ray absorbers, light stabilizers, peel strength adjusting agents, softening agents, surfactants, flame retardants, and anti-oxidizing agents. Examples of the crosslinking agents include isocyanate-based crosslinking agents, epoxy-based crosslinking agents, carbodiimide-based crosslinking agents, oxazoline-based crosslinking agents, aziridine-based crosslinking agents, amine-based crosslinking agents, peroxide-based crosslinking agents, melamine-based crosslinking agents, urea-based crosslinking agents, metal alkoxide-based crosslinking agents, metal chelate-based crosslinking agents, and metal salt-based crosslinking agents.

The thickness of the tacky adhesive layer is preferably 0.1 $\mu$m or more and 100 $\mu$m or less, more preferably 0.5 $\mu$m or more and 50 $\mu$m or less.

In addition, a functional layer may further be provided on at least one surface of the hard coat layer according to the present embodiment. Examples of the functional layer include, but not limited to, an antireflection layer, a polarizing layer, and a shock absorption layer.

[Process for Producing Coating Film]

A process for producing a coating film according to the present embodiment includes: a coating step of coating a base material with a coating composition containing a metal oxide (A) (also referred to as "component (A)" or "(A) component") and a polymer-emulsion-particle (B) (also referred to as "component (B)" or "(B) component"); a drying step of conducting drying at 5.0°C or higher and 80°C or lower; and an aging step of conducting aging under an environment of 30°C or higher and 150°C or lower and a humidity of 40%RH or higher and 100% RH or lower.

[Coating Step]

In the coating step according to the present embodiment, an intended, predetermined material (base material) is coated with the coating composition prepared in the manner as will be mentioned later.

<Coating Composition>

The coating composition according to the present invention contains the metal oxide (A) and the polymer-emulsion-particle (B) for forming the polymer particle which are used for imparting the snow accretion-preventing property to the coating film. In addition, the coating composition further contains an alkoxysilane (also referred to as "alkoxysilane (C)", "component (C)", or "(C) component"). Due to the alkoxysilane (C) being contained, there is a tendency that the surface roughness of the coating film can be controlled in a desired range, and the adhesiveness with the base material can be made further excellent. The coating film containing the alkoxysilane (C) is particularly used as a coating film for a member (for example, a roof material for houses) that is to be installed at a low angle to the ground surface as the hydrophilicity can be imparted to the surface of the coating film because the metal oxide (A) and the alkoxysilane (C) are contained.

<Metal Oxide (A)>

It is preferable that the metal oxide (A) contained in the coating composition be in a state of colloid (sol) in which the metal oxide is dispersed in a liquid. The colloid is not particularly limited, and examples thereof include colloidal silica and dry silica (fumed silica).

Examples of the commercially available material for forming the metal oxide (A) include, but not limited to, trade names "SNOWTEX-O (R)", "SNOWTEX-OS (R)", "SNOWTEX-OXS (R)", "SNOWTEX-O40 (R)" and "LIGHT STAR (R)" each manufactured by Nissan Chemical Industries, Ltd.; and water dispersion of colloidal silica, trade names "NALCO 1115", "NANOUSE ZR-40BL (R)", "NANOUSE ZR-30BS (R)", "NANOUSE ZR-30BFN (R)", "NANOUSE ZR-30AL (R)", "NANOUSE ZR-20AS (R)", "NANOUSE ZR-30AH (R)", "CELNAX CX-Z330H (R)", "CELNAX CX-Z610M (R)", and "CELNAX CX-Z410K (R)" each manufactured by Nalco Company. In addition, examples of the silica made by a gas phase method include trade names "Fumed Silica A200", "Fumed Silica A300", and "Fumed Silica A380" each manufactured by NIPPON AEROSIL CO., LTD. These can be dispersed in water to be used. Other examples include trade names "SNOWTEX-OUP (R)", "SNOWTEX-UP (R)", "SNOWTEX-PSSO (R)", and "SNOWTEX-PSS (R)" each manufactured by Nissan Chemical Industries, Ltd., and scale-shaped silica, trade name "SUNLOVELY" manufactured by ASAHI GLASS CO., LTD.

The metal oxides (A) may be used singly or in a combination of two or more.

<Polymer-emulsion-particle (B)>

The polymer-emulsion-particle (B) contained in the coating composition is preferably obtained by polymerizing a hydrolyzable silicon compound (hereinafter, also referred to as "hydrolyzable silicon compound (b1) or also simply referred to as "(b1)") and is more preferably obtained by polymerizing also a vinyl monomer (hereinafter, also referred to as "vinyl monomer (b2)" or also simply referred to as "(b2)") from the viewpoint of the adhesiveness to the base material particularly at low temperatures and the suppression of cracks. Specifically, the polymer-emulsion-particle is more preferably obtained by polymerizing the hydrolyzable silicon compound (b1) and the vinyl monomer (b2) in the presence of water and an emulsifying agent.

As the emulsifying agent, dodecylbenzenesulfonic acid and/or the derivatives or isomers thereof are preferable from the viewpoint of having both the emulsifying action and the function as a catalyst, thereby exhibiting a stable polymerizability. It is preferable that the amount of the emulsifying agent to be added be from 0.1 parts by mass to 20 parts by mass based on 100 parts by mass of the solid content of the (B) component from the viewpoint of the polymerization stability and the control of particle diameters.

It is preferable that the content by percentage of the aqueous phase component in the polymer-emulsion-particle (B) be 1.0% or more and 30% or less, more preferably 5.0% or more and 15% or less from the viewpoint of suppressing the melting of snow particles. The content by percentage can be measured by the method described in Examples, which will be mentioned later.

The polymer-emulsion-particle may contain any of a copolymer of (b1) and (b2), a polymer obtained by polymerizing (b1) alone or (b2) alone, a mixture thereof, and a composite thereof, and may also contain a combination of two or more thereof.

Examples of the hydrolyzable silicon compound (b1) include, but not limited to, compounds represented by the following formula (7), condensation products thereof, and silane coupling agents.

$$SiW_xR_y \ ... \qquad (7)$$

(in formula (7), W represents at least one group selected from the group consisting of alkoxy groups having 1 to 20 carbon atoms; a hydroxy group; an acetoxy group having 1 to 20 carbon atoms; a halogen atom; a hydrogen atom; oxime groups having 1 to 20 carbon atoms; enoxy groups; aminoxy groups; and an amide group. R represents at least one hydrocarbon group selected from the group consisting of straight-chain or branched alkyl groups having 1 to 30 carbon atoms; cycloalkyl groups having 5 to 20 carbon atoms; and unsubstituted alkyl groups or alkyl groups having 1 to 20 carbon atoms, and alkoxy groups having 1 to 20 carbon atoms or halogen atom-substituted aryl groups having 6 to 20 carbon atoms. x is an integer of 1 or more and 4 or less, and y is an integer of 0 or more and 3 or less. In addition, x + y = 4.)

The silane coupling agent is a hydrolyzable silicon compound in which a functional group, such as a vinyl polymerizable group, an epoxy group, an amino group, a methacrylic group, a mercapto group, and an isocyanate group, having reactivity with an organic matter exists in the molecule. Among these, the silane coupling agent having a vinyl polymerizable group is more preferably used from the viewpoint of the weatherability of the coating film in optical applications.

Specific examples of the hydrolyzable silicon compound (b1) include, but not limited to, tetraalkoxysilanes such as tetramethoxysilane, tetraethoxysilane, tetra-n-propoxysilane, tetraisopropoxysilane, and tetra-n-butoxysilane; trialkoxysilanes such as methyl trimethoxysilane, methyl triethoxysilane, ethyl trimethoxysilane, ethyl triethoxysilane, n-propyl trimethoxysilane, n-propyl triethoxysilane, isopropyl trimethoxysilane, isopropyl triethoxysilane, n-butyl trimethoxysilane, n-butyl triethoxysilane, n-pentyl trimethoxysilane, n-hexyl trimethoxysilane, n-heptyl trimethoxysilane, n-octyl trimethoxysilane, vinyl trimethoxysilane, vinyl triethoxysilane, allyl trimethoxysilane, cyclohexyl trimethoxysilane, cyclohexyl triethoxysilane, phenyl trimethoxysilane, phenyl triethoxysilane, 3-chloropropyl trimethoxysilane, 3-chloropropyl triethoxysilane, 3,3,3-trifluoropropyl trimethoxysilane, 3,3,3-trifluoropropyl triethoxysilane, 3-aminopropyl trimethoxysilane, 3-aminopropyl triethoxysilane, 2-hydroxyethyl trimethoxysilane, 2-hydroxyethyl triethoxysilane, 2-hydroxypropyl trimethoxysilane, 2-hydroxypropyl triethoxysilane, 3-hydroxypropyl trimethoxysilane, 3-hydroxypropyl triethoxysilane, 3-mercaptopropyl trimethoxysilane, 3-mercaptopropyl triethoxysilane, 3-isocyanatopropyl trimethoxysilane, 3-isocyanatopropyl triethoxysilane, 3-glycidoxypropyl trimethoxysilane, 3-glycidoxypropyl triethoxysilane, 2-(3,4-epoxycyclohexyl)ethyl trimethoxysilane, 2-(3,4-epoxycyclohexyl)ethyl triethoxysilane, 3-(meth)acryloyloxypropyl trimethoxysilane, 3-(meth)acryloyloxypropyl triethoxysilane, 3-(meth)acryloyloxypropyl tri-n-propoxysilane, 3-(meth)acryloyloxypropyl triisopropoxysilane, 3-ureidopropyl trimethoxysilane, and 3-ureidopropyl triethoxysilane; dialkoxysilanes such as dimethyl dimethoxysilane, dimethyl diethoxysilane, diethyl dimethoxysilane, diethyl diethoxysilane, di-n-propyl dimethoxysilane, di-n-propyl diethoxysilane, diisopropyl dimethoxysilane, diisopropyl diethoxysilane, di-n-butyl dimethoxysilane, di-n-butyl diethoxysilane, di-n-pentyl dimethoxysilane, di-n-pentyl diethoxysilane, di-n-hexyl dimethoxysilane, di-n-hexyl diethoxysilane, di-n-heptyl dimethoxysilane, di-n-heptyl diethoxysilane, di-n-octyl dimethoxysilane, di-n-octyl diethoxysilane, di-n-cyclohexyl dimethoxysilane, di-n-cyclohexyl diethoxysilane, diphenyl dimethoxysilane, diphenyl diethoxysilane, and 3-(meth)acryloyloxypropyl methyldimethoxysilane; and monoalkoxysilanes such as trimethyl methoxysilane, and trimethyl ethoxysilane.

The hydrolyzable silicon compound (b1) may be a condensation product. In such a case, the weight average molecular weight in terms of polystyrene obtained by GPC (Gel Permeation Chromatography) measurement of the condensation product is preferably 200 or higher and 5000 or lower, more preferably 300 or higher and 1000 or lower.

In addition, these hydrolyzable silicon compounds (b1) may be used singly or in a combination of two or more.

It is preferable that the amount of the hydrolyzable silicon compound (b1) to be used be in a range of 0.1 or more and 0.95 or less as the mass ratio to the polymer-emulsion-particle (B) to be obtained ((b1)/(B)) from the viewpoint of the adhesiveness to the base material particularly at low temperatures and the suppression of cracks. The mass of the polymer-emulsion-particle (B) here means the mass of the polymerization product obtained when all the vinyl monomer (b2) and the hydrolyzable silicon compound (b1) are assumed to be reacted.

Examples of the vinyl monomer (b2) include, but not limited to, N-methylacrylamide, N-methylmethacrylamide, N-ethylacrylamide, N,N-dimethylacrylamide, N,N-dimethylmethacrylamide, N,N-diethylacrylamide, N-ethylmethacrylamide, N-methyl-N-ethylacrylamide, N-methyl-N-ethylmethacrylamide, N-isopropylacrylamide, N-n-propylacrylamide, N-isopropylmethacrylamide, N-n-propylmethacrylamide, N-methyl-N-n-propylacrylamide, N-methyl-N-isopropylacrylamide, N-acryloylpyrrolidine, N-methacryloylpyrrolidine, N-acryloylpiperidine, N-methacryloylpiperidine, N-acryloylhexahydroazepine, N-acryloylmorpholine, N-methacryloylmorpholine, N-vinylpyrrolidone, N-vinylcaprolactam, N,N'-methylenebisacrylamide, N,N'-methylenebismethacrylamide, N-vinylacetamide, diacetone acrylamide, diacetone methacrylamide, N-methylolacrylamide, N-methylolmethacrylamide, dimethylaminoethyl methacrylate, diethylaminoethyl methacrylate, and a quaternized product of dimethylaminoethyl methacrylate.

Examples of the (meth)acrylate include, but not limited to, alkyl (meth)acrylates whose alkyl moiety has 1 to 50 carbon atoms and (poly)oxyethylene di(meth)acrylates having 1 to 100 ethylene oxide groups.

Examples of the alkyl (meth)acrylates whose alkyl moiety has 1 to 50 carbon atoms include, but not limited to, methyl (meth)acrylate, ethyl (meth)acrylate, n-butyl (meth)acrylate, 2-ethylhexyl (meth)acrylate, methylcyclohexyl (meth)acrylate, cyclohexyl (meth)acrylate, lauryl (meth)acrylate, and dodecyl (meth)acrylate.

Examples of the (poly)oxyethylene di(meth)acrylates having 1 to 100 ethylene oxide groups include, but not limited to, ethylene glycol di(meth)acrylate, diethylene glycol di(meth)acrylate, diethylene glycol methoxy (meth)acrylate, and tetraethylene glycol di(meth)acrylate.

Examples of the vinyl monomer (also referred to as "vinyl monomer (b3)" or also simply referred to as "(b3)") that can be used together with (b1) in addition to (b2) include, but not limited to, aromatic vinyl compounds such as styrene and vinyltoluene; cyanated vinyl compounds such as acrylonitrile and methacrylonitrile; carboxy group-containing vinyl monomers such as (meth)acrylic acid, crotonic acid, itaconic acid, maleic acid, fumaric acid, maleic anhydride, and half esters of a dibasic acid such as itaconic acid and maleic acid; hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; hydroxyalkyl fumarates such as di-2-hydoxyethyl fumarate and mono-2-hydroxyethylmonobutyl fumarate; allyl alcohol and (poly)oxyethylene mono(meth)acrylates having 1 to 100 ethylene oxide groups; (poly)oxypropylene mono(meth)acrylates having 1 to 100 propylene oxide groups; hydroxy group-containing vinyl monomers such as "PACCEL FM and FA monomers" (trade names of caprolactone-added monomers manufactured by Daicel Corporation) and other hydroxyalkyl esters of an $\alpha,\beta$-ethylenically unsaturated carboxylic acid; epoxy group-containing vinyl monomers such as glycidyl (meth)acrylate, allyl glycidyl ether, and allyl dimethyl glycidyl ether; and carbonyl-containing vinyl monomers such as diacetone acrylamide. In addition, examples of the vinyl monomer (b3), as a reactive emulsifying agent, which has a sulfonic acid group or a sulfonate group include, but not limited to, compounds which have a radical polymerizable double bond and a substituent selected from the group consisting of alkyl groups having 1 to 20 carbon atoms, alkyl ether groups having 2 to 4 carbon atoms, polyalkyl ether groups having 2 to 4 carbon atoms, aryl groups having 6 or 10 carbon atoms, and a succinic acid group, wherein part of the substituent is substituted with a group that is an ammonium salt, a sodium salt, or a potassium salt of a sulfonic acid group; and vinyl sulfonate compounds having a vinyl group to which a group that is an ammonium salt, sodium salt, or a potassium salt of a sulfonic acid group is bonded

Examples of the compound having a succinic acid group part of which is substituted with a group that is an ammonium salt, a sodium salt, or a potassium salt of a sulfonic acid group include, but not limited to, ally sulfosuccinates. Examples of the commercially available allyl sulfosuccinates include, but not limited to, "ELEMINOL JS-2" (manufactured by Sanyo Chemical Industries, Ltd., trade name), and "LATEMUL S-120", "LATEMUL S-180A", and "LATEMUL S-180" (each manufactured by Kao Corporation, trade names). Examples of the compound having an alkyl ether group having 2 to 4 carbon atoms or having a polyalkyl ether group having 2 to 4 carbon atoms, wherein part of the alkyl ether group or the polyalkyl ether group is substituted with a group that is an ammonium salt, a sodium salt, or a potassium salt of a sulfonic acid group include, but not limited to, "Aqualon HS-10" and "Aqualon KH-1025" (each manufactured by DKS Co., Ltd., trade names), and "ADEKA REASOAP SE-1025N" and "ADEKA REASOAP SR-1025" (each manufactured by ADEKA CORPORATION, trade names).

When the hydroxy-group containing vinyl monomer, the epoxy group-containing vinyl monomer, or the carbonyl group-containing vinyl monomer is used, the polymer-emulsion-particle (B) is made to have reactivity. The reactivity allows the polymer to be crosslinked by a hydrazine derivative, a carboxylic acid derivative, or an isocyanate derivative to improve the elasticity of the coating film and therefore there is a tendency that the occurrence of cracks at low temperatures can be suppressed.

It is preferable that the vinyl monomer (b2) used for the polymer-emulsion-particle (B) be 5.0% by mass or more and 80% by mass or less, more preferably 10% by mass or more and 50% by mass or less, and still more preferably 15% by mass or more and 40% by mass or less based on the total amount (100% by mass) of the monomers from the viewpoint of the adhesiveness to the base material. When (b2) is 80% by mass or less, there is a tendency that the weatherability of the coating film is excellent, and when (b2) is 5.0% by mass or more, there is a tendency that the adhesiveness to the base material is improved.

It is preferable that the polymer particle (B), when used in the hard coat layer, have a core/shell structure. Further, in the polymer particle (B), the flexibility in the core layer is preferably different from that in the shell layer, and the shell layer more preferably has a higher hardness than the core layer from the viewpoint of elasticity of the hard coat film. That is, it is preferable that the core layer be more flexible than the shell layer.

The hardness of the hard coat layer can also be controlled, for example, when the hydrolyzable silicon compound (b1) is contained in the shell layer. That is, the hardness of the hard coat film can be controlled by using as the hydrolyzable silicon compound (b1) a hydrolyzable silicon compound (b1-3) having 3 or more hydrolyzable functional groups and specifying a mass ratio of the hydrolyzable silicon compound (b1-3) having 3 or more hydrolyzable functional groups to the total amount of the vinyl monomer (b2-2) having a secondary and/or a tertiary amido group and the whole hydrolyzable silicon compound (b1).

Further, it is preferable that, in the shell layer, the ratio of the hydrolyzable silicon compound, the (b1-3) component, having 3 or more hydrolyzable functional groups to the total amount of the whole hydrolyzable silicon compound (b1) and the vinyl monomer (b2-2) having a secondary and/or a tertiary amido group satisfy $0.01 < (b1\text{-}3)/((b1) + (b2\text{-}2)) < 0.20$, more preferably $0.1 < (b1\text{-}3)/((b1) + (b2\text{-}2)) < 0.3$. Thereby, there is a tendency that the strength of the hard coat film is improved more.

Furthermore, it is preferable that, in the core layer, the ratio of the hydrolyzable silicon compound, the (b1-3) component, having 3 or more hydrolyzable functional groups to the total amount of the whole hydrolyzable silicon compound (b1) and the vinyl monomer (b2-2) having a secondary and/or a tertiary amido group be set as $(b1\text{-}3)/((b1) + (b2\text{-}2)) > 0.20$, more preferably 0.35 or more for the purpose of improving the strength of the hard coat film.

In addition, it is preferable that the mass ratio of the vinyl monomer (b2) contained in the polymer particle (B) be 20% by mass or more, more preferably 40% by mass or more, and still more preferably 50% by mass or more from the viewpoint of the strength and optical performance of the hard coat film. As far as the vinyl monomer (b2) in the core layer is concerned, 70% by mass or more is preferable, more preferably 80% by mass or more, and still more preferably 90% by mass or more.

<Alkoxysilane (C)>

The coating film according to the present embodiment may further contain the alkoxysilane (C) in addition to the metal oxide (A) and the polymer-emulsion-particle (B). It is to be noted that the hydrolyzable silicon compound (b1) is a component that constitutes the polymer-emulsion-particle (B) and is integrally incorporated in the component (B), and therefore the alkoxysilane (C) is added separately and independently from the component (A) and the component (B) and is clearly distinguished from the hydrolyzable silicon compound (b1).

It is preferable that the alkoxysilane (C) be at least one hydrolyzable silicon compound selected from the group consisting of the compounds represented by the following formulas (8), (9), (10), and (1).

$$R^1{}_n SiX_{4-n} \dots \qquad (8)$$

(in formula (8), $R^1$ represents an alkyl group, alkenyl group, or alkynyl group having 1 to 10 carbon atoms, or an aryl group each optionally having at least one selected from the group consisting of a hydrogen atom, or halogen groups, a hydroxy group, a mercapto group, amino groups, (meth)acryloyl groups, and an epoxy group. X represents a hydrolyzable group, and n is an integer of 0 to 3.)

$$X^3Si-R^2{}_n-SiX^3 \ldots \qquad (9)$$

(in formula (9), $X^3$ represents a hydrolyzable group, $R^2$ represents an alkylene group having 1 to 6 carbon atoms or a phenylene group. n is 0 or 1.)

$$R^3-(O-Si(OR^3)_2)_n-OR^3 \ldots \qquad (10)$$

(in formula (10), $R^3$ represents an alkyl group having 1 to 6 carbon atoms. n is an integer of 2 to 8.)

A multifunctional silane having 3 to 20 atomic groups represented by the following formula (1) in one molecule can be used from the viewpoint of improving the elastic recovery ratio $W_{ER}$.

$$R^1{}_nSiX_{3-n}A- \qquad (1)$$

(in formula (1), $R^1$ represents hydrogen, or an alkyl group, alkenyl group, or alkynyl group having 1 to 10 carbon atoms, or an aryl group, and further, these functional groups each optionally have a halogen group, a hydroxy group, a mercapto group, an amino group, a (meth)acryloyl group, or an epoxy group, X represents a hydrolyzable group, n represents an integer of 0 to 2, and A represents a moiety containing 2 to 20 methylene groups, optionally comprising a substituent on the methylene groups.)

Specific examples of the alkoxysilane (C) include, but not limited to, partially hydrolyzed condensates of tetramethoxysilane (for example, trade name "M Silicate 51" manufactured by TAMA CHEMICALS CO., LTD., trade name "MSI51" manufactured by COLCOAT CO., LTD., and trade names "MS51" and "MS56" each manufactured by Mitsubishi Chemical Corporation), partially hydrolyzed condensates of tetraethoxysilane (for example, trade names "Silicate 35" and "Silicate 45" each manufactured by TAMA CHEMICALS CO., LTD., and trade names "ESI40" and "ESI48" each manufactured by COLCOAT CO., LTD.), and co-partially-hydrolyzed condensate of tetramethoxysilane and tetraethoxysilane (for example, trade name "FR-3" manufactured by TAMA CHEMICALS CO., LTD., and trade name "EMSi48" manufactured by COLCOAT CO., LTD.). Besides, examples of the component (C) include various kinds of silane coupling agents such as trade names "KBE-402", "KBM-803", "KBM-802", "KBE-403", "KBM-303", "KBM-1403", "KBM-9659", "KBM-585", "KBM-846", "KBM-9007", "KP-64", "KP-851", "KR-220L", "KR-242A", "KR-251", "KC-89", "KR-500", "KR-400", "KR-255", "KR-271", "KR-282", "KR-300", "KR-311", "KR-212", "KR-213", and "KR-9218" each manufactured by Shin-Etsu Chemical Co., Ltd. These may be used singly or in a combination of two or more.

The alkoxysilane (C) can be condensed to form a condensate (C'). It is preferable that the condensate (C') have a weight average molecular weight of 8000 or higher and 500000 or lower, more preferably 8000 or higher and 200000 or lower, still more preferably 8000 or higher and 100000 or lower, even still more preferably 20000 or higher and 85000 or lower, and further still more preferably 10000 or higher and 50000 or lower in terms of polystyrene. When the weight average molecular weight is 8000 or higher, there is a tendency that the hydrophilicity of the coating film is maintained, and when the weight average molecular weight is 500000 or lower, there is a tendency to suppress that the coating film becomes fragile to be peeled. To obtain the condensate of the alkoxysilane (C) having a weight average molecular weight in the range, for example, in the presence of an acid catalyst such as dodecylbenzenesulfonic acid, the amount of the acid to be added and the mixing ratio of solvents in a mixed solvent of water and an alcohol, the reaction temperature, and the reaction time may be controlled.

It is preferable that the coating composition for forming the coating film according to the present embodiment have a mass ratio of the metal oxide (A) to the polymer-emulsion-particle (B) ((A)/(B)) of 10/100 or more and 1000/100 or less, more preferably 50/100 or more to 300/100, and still more preferably 80/100 or more to 250/100 from the viewpoint of the surface roughness obtained when the coating film is made.

It is preferable that the mass ratio of the metal oxide (A) to the alkoxysilane (C) ((A)/(C)) be 0.5/100 or more and 500/100 or less, more preferably 5/100 or more to 300/100, and still more preferably 15/100 or more to 100/100 from the viewpoint of controlling the water contact angle in a desired range. The mass of the alkoxysilane (C) here means the mass of the hydrolyzed condensate of the alkoxysilane (C) in terms of $SiO_2$ determined when the alkoxysilane (C) is assumed to be completely hydrolyzed and condensed.

It is preferable that the solid content of the coating composition according to the present embodiment be 0.1% by mass or more and 50% by mass or less, more preferably 0.2% by mass or more and 25% by mass or less, and still more preferably 0.5% by mass or more and 10% by mass or less based on the total amount (100% by mass) of the coating composition. When the solid content is 50% by mass or less, there is a tendency that it becomes easy to control the film thickness after the drying step in a desired film thickness. In addition, when the solid content is 0.1% by mass or more, there is a tendency that it becomes easy to control the film thickness because there is no need to paint the coating composition thickly to obtain a desired dry film thickness.

It is preferable that the coating composition have a viscosity of 0.1 mPa·s or higher and 2000 mPa·s or lower, more preferably 1.0 mPa·s or higher and 200 mPa·s or lower, and still more preferably 2.0 mPa·s or higher and 50 mPa·s or lower at 25°C.

It is preferable that the order of mixing in preparing the coating composition be the component (A), the component (B), and the component (C) in this order. For example, the coating composition is prepared as follows. After the component (A) is weighed, the component (B) is dropped at a speed of 0.4 g/s or faster under stirring to be mixed. Subsequently, the component (C) in a state of 20°C to 30°C is added, and the stirring is preferably continued for 2 hours or longer. When the stirring is continued for 2 hours or longer, the hydrolysis and condensation of the component (C) are accelerated to suppress that the surface roughness of the coating film becomes too large and that the contact angle on the coating film increases.

Further, filtration is conducted using a filter cloth having an opening of 200 mesh or less, preferably 400 mesh or less.

Here, it is preferable that the component (A) be diluted with ethanol or the like to be used. Thereby, the aggregation of the component (A) and the component (B) is suppressed to suppress that the surface roughness becomes too large. As a diluent, ethanol, methanol, isopropyl alcohol, an industrial alcohol, and the like can be used.

Examples of the method for coating the base material with the coating composition include, but not limited to, a spraying method, a flow coating method, a roll coating method, a brush painting method, a DIP coating method (dip coating method), a spin coating method, a screen printing method, a casting method, a gravure printing method, and a flexographic printing method. Among these, the roll coating method, the screen printing method, and the gravure printing method are preferable from the viewpoint of productivity. In addition, the spray coating method and the DIP coating method are preferable for the purpose of coating a base material having a complicated shape, and the roll coating method is preferable in coating a flat plate base material. Further, among these, the DIP coating method is greatly preferable because both surfaces of a base material can be coated at the same time and the DIP coating method is simple. That is, the coating step according to the present embodiment is preferably a step of conducting coating by the spray coating method, or a step of simultaneously coating both surfaces of a base material by the DIP coating method, and is more preferably the step of simultaneously coating both surfaces of a base material by the DIP coating method.

It is preferable that both surfaces be pre-treated by corona treatment or plasm treatment before the painting by the DIP coating method till the water contact angle reaches 40° or less, more preferably 20° or less. Thereafter, for example, the base material is sunk in a container for the coating composition and then lifted at a speed of 1.0 cm/s, so that the base material can be coated.

Besides the painting by the DIP coating method, coating with the coating composition may be conducted by the flow coating method. In the flow coating method, the base material is installed at an angle of 45° to 90° to the ground surface, and then the coating composition is poured from the uppermost portion of the base material with a dropper to coat the base material in such a way that the coating composition flows on the whole base material. It is to be noted that, with respect to the pre-treatment before the coating, the treatment can be conducted in the same manner as in the DIP coating method.

It is preferable that the film thickness to coat the base material with the coating composition be 0.05 $\mu$m or more and 50 $\mu$m or less, more preferably 0.5 $\mu$m or more and 15 $\mu$m or less, and still more preferably 1.0 $\mu$m or more and 10 $\mu$m or less. When the film thickness is 50 $\mu$m or less, there is a tendency that it becomes easy to obtain a uniform coating film, which is preferable in appearance.

It is preferable that the hard coat layer according to the present embodiment contain 5 parts by mass or more of the alkoxysilane (C), more preferably 10 parts by mass or more, and still more preferably 35 parts by mass based on 100 parts by mass of the polymer particle (B) in the hard coat layer from the viewpoint of the elastic recovery.

It is preferable that the hard coat layer according to the present embodiment contain 5% by mass or more of the alkoxysilane (C), more preferably 10 parts by mass or more, and still more preferably 35 parts by mass based on 100 parts by mass of the metal oxide (A) in the hard coat layer from the viewpoint of the film-forming property and the control of the maximum indentation.

In the case where the metal oxide (A), the alkoxysilane (C), and the polymer particle (B) are contained in the hard coat layer according to the present embodiment, the existence of these can be confirmed, for example, by the observation with a scanning electron microscope (SEM). That is, in the case where the coating film according to the present embodiment contains the (A) to (C) components, when the coating film is observed with the SEM, typically, a so-called sea-island structure can be observed. In the observed sea portion, the metal oxide (A) and the hydrolyzable silicon compound (B) can be contained. In addition, in the island portion, the alkoxysilane (C) and the polymer particle (B) can be contained. It is to be noted that it can be confirmed from the area ratio of the sea portion and the island portion being 100:0 to 30:70 that the metal oxide (A), the alkoxysilane (C), and the polymer particle (B) that can be contained in the coating film according to the present embodiment satisfy the preferable quantitative relation.

[Drying Step]

The drying step according to the present embodiment is a step of conducting drying at 5.0°C or higher and 80°C or lower. Examples of the drying method include, but not limited to, air drying, cold air drying, hot air drying, infrared drying, and combinations thereof.

The drying temperature in the drying step is 5.0°C or higher and 80°C or lower, preferably 10°C or higher and 60°C or lower, and still more preferably 20°C or higher and 40°C or lower from the viewpoint of the productivity and the control of the ten-point average roughness (Rz) obtained when the coating film is made. When the drying is conducted relatively fast by applying air during drying, there is a tendency that the ten-point average roughness (Rz) becomes large, and when the drying is conducted slowly by increasing the humidity, there is a tendency that the ten-point average roughness (Rz) becomes small.

[Aging Step]

The aging step according to the present embodiment is a step of conducting aging under an environment of 30°C or higher and 150°C or lower and a humidity of 40% RH or higher and 100% RH or lower. The aging is conducted under the environment from the viewpoint of the control of the ten-point average roughness (Rz) obtained when the coating film is made, the adhesiveness of the coating film, and the suppression of the bleed-out of the various kinds of components contained in the coating composition. The aging temperature is 30°C or higher and 150°C or lower, preferably 60°C or higher and 140°C or lower, and more preferably 90°C or higher and 130°C or lower. In addition, the aging humidity is 40% RH or higher and 100% RH or lower, preferably 60% RH or higher and 95% RH or lower, and more preferably 70% RH or higher and 90% RH or lower.

The production method of the hard coat layer (coating film) according to the present embodiment is not particularly limited and can be obtained, for example, by coating the base material with a composition dissolved or dispersed in a solvent or the like such as water to conduct drying by heating. In the case where a water-based composition is made using the components (A) to (C) in the present embodiment, not only the water-based composition is preferable from the standpoint of environmental load, but also there is a tendency that a sufficient film-forming property and a sufficient shaping property can be secured even when the water-based composition is compared with conventional solvent-based compositions. The solid concentration of the water dispersion is preferably 0.01 to 60% by mass, more preferably 1 to 40% by mass. In addition, the viscosity of the water dispersion is preferably 0.1 to 100000 mPa·s, more preferably 1 to 10000 mPa·s at 20°C. Further, examples of the coating method include, but not limited to, a spraying method, a flow coating method, a brush painting method, a dip coating method, a spin coating method, a screen printing method, a casting method, a gravure printing method, and a flexographic printing method. It is to be noted that the dispersed composition with which the coating has been conducted can be dried by heat treatment at preferably room temperature to 500°C, more preferably at 40°C to 250°C, irradiation with an ultraviolet ray, or other methods.

The hard coat film according to the present embodiment has excellent optical properties and scratch resistance in a single layer. Accordingly, the application of the hard coat film is not particularly limited, and examples thereof include building materials, automobile members, electronic devices, and electric products. Examples of the building materials include skin materials for wallpaper, signboards, alternatives to glass, and topcoats for external wall materials. Examples of the automobile members include exterior members such as a bumper and a door mirror, interior members such as a center panel and a door panel, headlamp and rear lamp members, and members alternative to glass. The hard coat film according to the present embodiment is preferably used in the electric products such as cellular phones, personal computers, and portable gaming devices. Further, the hard coat film according to the present embodiment can also be used as a member for signals, a top coat material for machines/apparatuses, and the like.

[Functional Member]

The functional member according to the present embodiment includes a base material and the coating film on the base material. The functional member is excellent in adhesiveness and an antifouling property, and therefore examples thereof include, but not limited to, building materials, building exterior, window frames, window glass, structural members, exterior and painting for vehicles, display devices and the covers thereof, traffic signs, various kinds of display apparatuses, electronic blackboards, display items at advertising towers; insulation walls for roads, rail roads, and the like; exterior and painting for bridges or guardrails, interior and painting for tunnels, insulator, exterior portions of electric or electrical devices that are used outside such as covers for solar cells and heat-collecting covers for solar water-heaters; agricultural films, vinyl houses, greenhouses, camera lenses, filters for lenses, headlamp lenses, headlamp covers (inner surface, outer surface), tail lamp covers (inner surface, outer surface), insulation sheets for power conditioners, wallpaper, oil/water separation filters, clothing, and fiber.

It is preferable that the base material according to the present embodiment be non-planar. Examples of the non-planar surface include a spherical surface and a semispherical surface.

It is preferable that the functional member be used setting the installation angle at a low angle to the ground surface, more preferably at 10° or more and 140° or less. Examples of the article that is used at such an installation angle include roof materials and photovoltaic power generation panels.

The coating composition according to the present embodiment can impart the snow accretion-preventing property to the base material. The functional member obtained by coating the base material with the coating composition can be used in snow-covered areas from the viewpoint of having a snow sliding property. Particularly, it is suitable that the functional member is provided to a roof, a photovoltaic power generation panel, an electric cable, an iron tower for an electric cable, a road traffic sign, a signal, a display board for outdoor use, a headlamp for an automobile or the like. The functional member is excellent in the snow accretion-preventing property even when the surface temperature is low, and therefore it is also preferable that the functional member be provided to a member for outdoor use selected from the group consisting an LED signal, an LED headlamp, a lens for an LED, and a display board for outdoor use.

Examples

Hereinafter, the present embodiments will be described in more detail giving Examples and Comparative Examples specifically; however, the present embodiments are not limited at all by Examples and Comparative Examples within a range not exceeding the gist thereof. Various physical properties described in Synthesis Examples, Examples, and Comparative Examples, which will be mentioned later, were measured by the following methods.

(Physical Property 1) Number Average Particle Diameter of Polymer-emulsion-particle

The number average particle diameter of each polymer-emulsion-particle (B) obtained in Synthesis Examples, which will be mentioned later, was measured with a dynamic light scattering type particle size distribution measuring apparatus (manufactured by NIKKISO CO., LTD., trade name "Microtrack UPA").

(Physical Property 2) Content by Percentage of Water Phase Components of Polymer-emulsion-particle

Each polymer-emulsion-particle (B) obtained in Synthesis Examples, which will be mentioned later, was subjected to filtration with a cutoff molecular weight of 50,000, and the filtrate and the residue were evaporated to dryness. The content by percentage of the water phase components was determined from the following expression, wherein the total amount obtained after the filtrate and the residue were evaporated to dryness is denoted as the total solid mass, and the mass obtained after the filtrate was evaporated to dryness is denoted as the dry mass of the filtrate.

```
Content by percentage of water phase components (%)

= (dry mass of filtrate obtained after subjecting

polymer-emulsion-particle (B) to filtration with cutoff molecular weight of 50,000)/(total solid mass of polymer-

emulsion-particle (B)) × 100
```

Whether a nitrogen-containing component existed or not was checked by quantitative analysis with a pyrolysis gas chromatography apparatus for the filtrate obtained after the evaporation to dryness. The following pyrolysis apparatus, GC (gas chromatography) apparatus, and MS (mass spectrometry) apparatus as a detector were used as the pyrolysis gas chromatography apparatus.

Pyrolysis apparatus: manufactured by Frontier Laboratories Ltd., trade name "2020iD"
Inlet temperature: 320°C
GC apparatus: manufactured by Agilent Technologies Japan, Ltd., trade name "7890A"
Column: manufactured by J&W Co., Ltd., trade name "DB-1" (0.25 mm × 30 m, liquid phase thickness: 0.25 $\mu$m)
Temperature condition initial temperature: 40°C (5-Mmin retention), temperature increase rate: 20°C/min Inlet temperature: 320°C (6-min retention)
Injection mode: Split method, Constant flow: 1 mL/min
MS apparatus: manufactured by Agilent Technologies Japan, Ltd., trade name "5975C"

Scan condition: SCAN m/z = 10 to 800
Detection method: Ionization method Electron Ionization (EI) method
Interface temperature: 320°C

(Physical Property 3) Surface Roughness (Ten-Point Average Roughness (Rz) and Arithmetic Average Roughness (Ra))

The coating film on each member obtained in Examples and Comparative Examples, which will be mentioned later, was used as a sample, and the ten-point average roughness (Rz) and the arithmetic average roughness (Ra) were measured with an apparatus: trade name "Dimension Icon" manufactured by BrukeRzXS with a measurement mode; ScanAsyst, probe; a ScanAsyst-Air type $Si_3N_4$ probe (tip diameter of 2 nm) in accordance with JIS B 0601-1994. The results were subjected to data processing, and an inclination correction (Plane Fit X first order, Y first order) was applied to the obtained image to work out Rz and Ra.

(Physical Property 4) Water Contact Angle (°)

A drop (1.0 μL) of deionized water was put on the coating film on each member obtained in Examples and Comparative Examples, which will be mentioned later, and was then left at 25°C for 10 seconds. Thereafter, the initial contact angle was measured using a "CA-X150 type contact angle meter", trade name, manufactured by Kyowa Interface Science Co., Ltd. of Japan. A smaller contact angel of water to an optical coating film indicates a higher hydrophilicity at the coating film surface.

(Physical Property 5) Abundance of Hydroxy Group

The following operations (1) to (5) were conducted.

(1) A sample (each member including coating film and obtained in Examples and Comparative Examples, which will be mentioned later) was placed in a reaction container (60-mL container made of PFA) and was then left to stand in an Ar glove BOX (dew point: <-100°C) for a whole day and night.
(2) A lid was put on the reaction container, and then the reaction container was taken out from the Ar glove BOX.
(3) The lid was opened in a draft chamber, several μL of the following F compound reagent were then dropped into the container immediately, and the lid was closed again immediately.
(4) The sample was left to stand for a predetermined time and then taken out from the container.
(5) The provided sample was covered with a 2-mmφ) mask and then subjected to XPS measurement. The measurement conditions were set as follows.

F compound reagent: $C_6F_{13}$-$CH_2CH_2$-$Si(CH_3)_2Cl$
XPS measurement conditions

Device used: Thermo Fisher ESCALAB 250
Excitation source: monochromatic AlKα 15 kV × 10 mA
Analysis size: about 1 mm (shape was ellipse)
Import area

Survey scan: 0 to 1,100 eV
Narrow scan: C 1s/K 2p, N 1s, Si 2p, O 1s, Cl 2p, Na 1s, Ca 2p, and S 2p
The peaks of C 1s and K 2p are near, and therefore data were imported together.

Pass Energy

Survey scan: 100 eV
Narrow scan: 20 eV

The element concentrations (atomic%) of fluorine and silicon were measured by XPS, and the concentration ratio of fluorine and silicon (F/Si) was used as the abundance of a hydroxy group.

(Physical Property 6) Porosity

$$\text{Porosity (\%)} = (1.46 - (\text{refractive index of film at } 550\ \text{nm}))/0.46 \times 100 \quad \ldots (2)$$

The refractive index in expression (2) was determined by measuring the reflectance at each wavelength in a wavelength range from 230 to 800 nm using a reflection spectroscopic film thickness meter (manufactured by Otsuka Electronics Co., Ltd., model: FE-3000) and measuring the refractive index of a glass base material from the back side of the glass base material using the reflection spectroscopic film thickness meter. Further, the intensity of lights reflected from the glass base material and the film and interfering with each other was measured from the film side at 2-nm intervals between 230 nm and 800 nm, and by computationally searching the refractive index and film thickness of the film using the measured refractive index of the glass base material in the wavelength range and the measured intensity of reflected lights interfering with each other, fitting to the measured values was conducted by a least-squares method to obtain the refractive index of the film and film thickness (nm). The refractive index of 1 was used for air, and the refractive index of 1.46 was used for silica.

(Evaluation 1) Antifouling Property

Each member obtained in Examples and Comparative Examples, which will be mentioned later, was made in a horizontal state, and the standard sand (Arizona sand (particle density: 2.65 g/cm$^3$) specified in ISO 12103-1 was sprinkled evenly on the member to be 2.0 g/cm$^2$. Thereafter, the member was set vertically to lean on a wall, and the extent of adhesion of the sand to the surface of the member was visually observed and evaluated according to the following criteria.

○: The sand is hardly adhered
Δ: The sand is adhered to some extent
X: The amount of the sand adhered is large

(Evaluation 2) Adhesiveness

Each member obtained in Examples and Comparative Examples, which will be mentioned later, was retained at -40°C for 1 hour, and the temperature was then increased to 50°C to retain the temperature for further 1 hour. This was set as 1 cycle, and the cycle was repeated further 5 times. Thereafter, CELLOTAPE (R) was stuck, the CELLOTAPE(R) was then peeled to an angle of 90°, and the state of the coating film after peeling the CELLOTAPE (R) was visually observed and evaluated according to the following criteria.

◎: Peeling does not occur
○: Peeling occurs partially
Δ: Peeling occurs in about a half portion
✕: The coating film is completely peeled

(Evaluation 3) Snow Sliding Property 1

The base material (5 cm × 5 cm polycarbonate) was replaced with a polymethyl methacrylate resin base material having a thickness of 2 mm, and coating films each having a thickness of 500 nm were formed in the same manner as in Examples and Comparative Examples, which will be mentioned later and were then left to stand in an environment of 5°C for 1 hour. Thereafter, a waterdrop (about 0.4 cc) of 5°C was dropped onto each coating film installed horizontally, and the angle of the base material was then gradually inclined vertically. On that occasion, the angle at the time when the waterdrop began to move was evaluated as a falling angle. A lower falling angle indicates a higher snow sliding property because the snow is more easily dropped. In addition, the falling angle at 20°C was also evaluated in the same manner.

(Evaluation4) Snow Sliding Property 2

Each member was installed at an angle of 30° to the ground surface at a certain place in the Hokuriku region during a snowfall in winter, and the member was observed for about 15 minutes after the start of snow accretion to evaluate the snow sliding property during accumulation of snow according to the following criteria.

○: The snow slides immediately (snow sliding property is good)
Δ: The snow slides gradually
×: The snow does not slide (snow sliding property is poor)

(Evaluation 5) Antifogging Property

The coating film face of each member obtained in Examples and Comparative Examples, which will be mentioned later, was exposed to 80°C steam for 10 seconds, and the degree of cloudiness was then visually decided to evaluate the antifogging property according to the following criteria.

○: Good (no cloudiness)
Δ: Cloudiness occurs partially
×: Cloudiness occurs

Hereinafter, Synthesis Examples of the polymer-particles-in-emulsion (B) used in Examples and Comparative Examples, which will be mentioned later, will be described.

(Synthesis Example 1) Polymer-emulsion-particle (B-1)

In a reactor provided with a reflux condenser, a drop tank, a thermometer, and a stirring apparatus, 1600 g of ion-exchanged water and 12 g of dodecylbenzenesulfonic acid were placed, and the resultant mixture was then heated to 80°C under stirring to obtain a mixed liquid (1).
As a core layer, a mixed liquid (2) containing 185 g of dimethyl dimethoxysilane and 151 g of phenyl trimethoxysilane was dropped into the obtained mixed liquid (1) in about 2 hours in a state where the temperature in the reactor was kept at 80°C to obtain a mixed liquid (3).
Thereafter, the mixed liquid (3) was stirred for about 1 hour in a state where the temperature in the reactor was 80°C. Next, as a shell layer, a mixed liquid (4) containing 150 g of butyl acrylate, 30 g of tetraethoxysilane, 145 g of phenyl trimethoxysilane, and 1.3 g of 3-methacryloxypropyl trimethoxysilane and a mixed liquid (5) containing 165 g of diethylacrylamide, 3 g of acrylic acid, 13 g of a reactive emulsifying agent (trade name "ADEKA REASOAP SR-1025", manufactured by Asahi Denka Co., Ltd., aqueous solution having solid content of 25% by mass), 40 g of a 2% by mass aqueous solution of ammonium persulfate, and 1900 g of ion-exchanged water were simultaneously dropped into the obtained mixed liquid (3) in about 2 hours in a state where the temperature in the reactor was kept at 80°C to obtain a mixture (6).
Further, as heat aging, the mixture (6) was stirred for about 2 hours in a state where the temperature in the reactor was 80°C. Thereafter, the mixture (6) was cooled to room temperature and then filtrated with a 100-mesh wire netting, and the concentration was adjusted with purified water to obtain a water dispersion (solid content of 10% by mass, pH of 3.2) of a polymer-emulsion-particle (B-1) (hereinafter, also simply referred to as "B-1") having a number average particle diameter of 40 nm. The amount of the water phase components in B-1 was 21%, and diethylamine was detected from the water phase components.

(Synthesis Example 2) Polymer-emulsion-particle (B-2)

In a reactor provided with a reflux condenser, a drop tank, a thermometer, and a stirring apparatus, 2600 g of ion-exchanged water, 13 g of dodecylbenzenesulfonic acid, and 20 g of a 25% aqueous solution of polyoxyethylene nonylphenyl ether (trade name "EMULGEN 950", manufactured by Kao Corporation) were placed, and the resultant mixture was then heated to 80°C under stirring to obtain a mixed liquid (1).
As a core layer, a mixed liquid (2) containing 18 g of methacrylic acid, 216 g of methyl methacrylate, 216 g of butyl acrylate, 6.9 g of 3-methacryloxypropyl trimethoxysilane, 101 g of methyl trimethoxysilane, and 40 g of a 2% by mass aqueous solution of ammonium persulfate was dropped into the obtained mixed liquid (1) in about 2 hours in a state where the temperature in the reactor was kept at 80°C to obtain a mixed liquid (3).
Thereafter, the mixed liquid (3) was stirred for about 1 hour in a state where the temperature in the reactor was 80°C. Next, as a shell layer, a mixed liquid (5) containing 235 g of butyl acrylate, 245 g of methyl methacrylate, 10 g of acrylic acid, 10 g of glycidyl methacrylate, 13 g of a reactive emulsifying agent (trade name "ADEKA REASOAP SR-1025", manufactured by Asahi Denka Co., Ltd., aqueous solution having solid content of 25% by mass), 40 g of a 2% by mass aqueous solution of ammonium persulfate, and 1900 g of ion-exchanged water was dropped into the obtained mixed liquid (3) in about 2 hours in a state where the temperature in the reactor was kept at 80°C to obtain a mixture (6).
Further, as heat aging, the mixture (6) was stirred for about 2 hours in a state where the temperature in the reactor was 80°C. Thereafter, the mixture (6) was cooled to room temperature and then filtrated with a 100-mesh wire netting, and the concentration was adjusted with purified water to obtain a water dispersion (solid content of 10% by mass, pH of 3.2) of a polymer-emulsion-particle (B-2) (hereinafter, also simply referred to as "B-2") having a number average particle diameter of 130 nm. The amount of the water phase components in B-2 was 10%, and an N-containing substance was not detected from the water phase components.

(Synthesis Example 3) Polymer-emulsion-particle (B-3)

In a reactor provided with a reflux condenser, a drop tank, a thermometer, and a stirring apparatus, 1600 g of ion-exchanged water and 3 g of dodecylbenzenesulfonic acid were placed, and the resultant mixture was then heated to 80°C under stirring to obtain a mixed liquid (1).
As a core layer, a mixed liquid (2) containing 185 g of dimethyl dimethoxysilane and 151 g of phenyl trimethoxysilane was dropped into the obtained mixed liquid (1) in about 2 hours in a state where the temperature in the reaction container was kept at 80°C to obtain a mixed liquid (3).
Thereafter, the mixed liquid (3) was stirred for about 1 hour in a state where the temperature in the reactor was 80°C. Next, as a shell layer, a mixed liquid (4) containing 150 g of butyl acrylate, 30 g of tetraethoxysilane, 145 g of phenyl trimethoxysilane, and 1.3 g of 3-methacryloxypropyl trimethoxysilane and a mixed liquid (5) containing 165 g of diethylacrylamide, 3 g of acrylic acid, 13 g of a reactive emulsifying agent (trade name "ADEKA REASOAP SR-1025", manufactured by Asahi Denka Co., Ltd., aqueous solution having solid content of 25% by mass), 40 g of a 2% by mass aqueous solution of ammonium persulfate, and 1900 g of ion-exchanged water were simultaneously dropped into the obtained mixed liquid (3) in about 2 hours in a state where the temperature in the reactor was kept at 80°C to obtain a mixture (6).
Further, as heat aging, the mixture (6) was stirred for about 2 hours in a state where the temperature in the reactor was 80°C. Thereafter, the mixture (6) was cooled to room temperature and then filtrated with a 100-mesh wire netting, and the concentration was adjusted with purified water to obtain a water dispersion (solid content of 10% by mass, pH of 3.9) of a polymer-emulsion-particle (B-3) (hereinafter, also simply referred to as "B-3") having a number average particle diameter of 180 nm. The amount of the water phase components in B-3 was 19%, and diethylamine was detected from the water phase components.

[Example 1]

To Water-dispersed colloidal silica (trade name "SNOWTEX OS (described as "ST-OS" in Tables", manufactured by Nissan Chemical Industries, Ltd., solid content of 20% by mass) having an average particle diameter of 8 nm as a starting material for a spherical metal oxide (A), 20% ethanol water was added according to a blending ratio described in Table 1. Next, the polymer-emulsion-particle (B-1) synthesized in Synthesis Example 1 was added, and then tetraethoxysilane (manufactured by Shin-Etsu Chemical Co., Ltd., trade name "KBE-04", described as "TEOS" in Tables) was finally added as an alkoxysilane (C). The resultant mixture was stirred at room temperature for 3 hours to obtain a coating composition having a solid content of 6% by mass.
A base material (5 cm × 5 cm polycarbonate) was coated with the coating composition using a dip coater so as to have a film thickness of 500 nm, thereafter dried at 25°C for 5 minutes, then dried at 130°C for 10 minutes, and further, subjected to aging under an environment of a humidity of 40% RH and a temperature of 30°C for 24 hours to obtain a member. The evaluation results of the obtained member are shown in Table 1.

[Example 2]

To Water-dispersed colloidal silica (trade name "SNOWTEX OS (described as "ST-OS" in Tables"), manufactured by Nissan Chemical Industries, Ltd., solid content of 20% by mass) having an average particle diameter of 8 nm as a starting material for a spherical metal oxide (A), 20% ethanol water was added according to a blending ratio described in Table 1. Next, the polymer-emulsion-particle (B-1) synthesized in Synthesis Example 1 was added, and then a tetramethoxysilane oligomer MS56 (trade name, manufactured by Mitsubishi Chemical Corporation, described as "MS56" in Tables) was finally added as an alkoxysilane (C). The resultant mixture was stirred at room temperature for 3 hours to obtain a coating composition having a solid content of 6% by mass.
A base material (5 cm × 5 cm polycarbonate) was coated with the coating composition using a dip coater so as to have a film thickness of 500 nm, thereafter dried at 25°C for 5 minutes, then dried at 130°C for 10 minutes, and further, subjected to aging under an environment of a humidity of 40% RH and a temperature of 30°C for 24 hours to obtain a member. The evaluation results of the obtained member are shown in Table 1.

[Example 3]

A member was obtained in the same manner as in Example 2 except that the blending ratio in the coating composition was changed as described in Table 1. The evaluation results of the obtained member are shown in Table 1.

[Example 4]

To Water-dispersed colloidal silica (trade name "SNOWTEX O (described as "ST-O" in Tables)", manufactured by Nissan Chemical Industries, Ltd., solid content of 20% by mass) having an average particle diameter of 15 nm as a starting material for a spherical metal oxide (A), 20% ethanol water was added according to a blending ratio described in Table 1. Next, the polymer-emulsion-particle (B-3) synthesized in Synthesis Example 3 was added, and then a tetramethoxysilane oligomer MS56 (trade name, manufactured by Mitsubishi Chemical Corporation, described as "MS56" in Tables) was finally added as an alkoxysilane (C). The resultant mixture was stirred at room temperature for 3 hours to obtain a coating composition having a solid content of 6% by mass.

A base material (5 cm × 5 cm polycarbonate) was coated with the coating composition using a dip coater so as to have a film thickness of 500 nm, thereafter dried at 25°C for 5 minutes, then dried at 130°C for 10 minutes, and further, subjected to aging under an environment of a humidity of 40% RH and a temperature of 30°C for 24 hours to obtain a member. The evaluation results of the obtained member are shown in Table 1.

[Example 5]

A member was obtained in the same manner as in Example 2 except that the polymer-emulsion-particle (B-2) was used in place of the polymer-emulsion-particle (B-1). The evaluation results of the obtained member are shown in Table 1.

[Example 6]

Water-dispersed colloidal silica (A1, trade name "SNOWTEX OXS (described as "ST-OXS" in Table1", manufactured by Nissan Chemical Industries, Ltd., solid content of 10% by mass) having an average particle diameter of 5 nm as a starting material for a spherical metal oxide (A) was mixed according to a blending ratio described in Table 1, thereafter water-dispersed colloidal silica (A2, trade name "SNOWTEX O-40 (described as "STO-40" in Table 1, manufactured by Nissan Chemical Industries, Ltd., solid content of 20% by mass) having an average particle diameter of 25 nm was mixed, and next, 20% ethanol water was added. Next, the polymer-emulsion-particle (B-1) synthesized in Synthesis Example 1 was added, and then a tetramethoxysilane oligomer MS56 (trade name, manufactured by Mitsubishi Chemical Corporation, described as "MS56" in Tables) was finally added as an alkoxysilane (C). The resultant mixture was stirred at room temperature for 3 hours to obtain a coating composition having a solid content of 6% by mass.

A base material (5 cm × 5 cm polycarbonate) was coated with the coating composition using a dip coater so as to have a film thickness of 500 nm, thereafter dried at 25°C for 5 minutes, then dried at 130°C for 10 minutes, and further, subjected to aging under an environment of a humidity of 40% RH and a temperature of 30°C for 24 hours to obtain a member. The evaluation results of the obtained member are shown in Table 1.

[Example 7]

To Water-dispersed colloidal silica (trade name "SNOWTEX OS", manufactured by Nissan Chemical Industries, Ltd., solid content of 20% by mass) having an average particle diameter of 8 nm as a starting material for a spherical metal oxide (A), 20% ethanol water was added according to a blending ratio described in Table 1. Next, the polymer-emulsion-particle (B-1) synthesized in Synthesis Example 1 was added, and then a tetramethoxysilane oligomer MS56 (trade name, manufactured by Mitsubishi Chemical Corporation, described as "MS56" in Tables) was finally added as an alkoxysilane (C). The resultant mixture was stirred at room temperature for 3 hours to obtain a coating composition having a solid content of 6% by mass.

A base material (5 cm × 5 cm polycarbonate) was coated with "SUPERFLEX 150 (described as "SF 150" in Tables)", trade name, manufactured by DKS Co., Ltd. as a starting material for an intermediate layer with a spin coater so as to have a film thickness of 100 nm and then dried at 80°C for 10 minutes to provide an intermediate layer on the base material.

Next, the base material with the intermediate layer was coated with the coating composition using a dip coater so as to have a film thickness of 500 nm, then dried at 25°C for 5 minutes, further dried in a humidity of 40% RH at a temperature of 130°C for 10 minutes, and then aged in an environment of 30°C for 24 hours to obtain a member. The evaluation results of the obtained member are shown in Table 1.

[Example 8]

A member was obtained in the same manner as in Example 2 except that the polymer-emulsion-particle (B-4) (trade name "NeoCryl A-614", acrylic emulsion manufactured by Royal DSM N.V., solid content of 32%, pH of 8.0, viscosity of 200 mPa·s, glass transition temperature of 74°C, minimum film-forming temperature of 10°C, amount of water phase components of 11%, N-containing component was not detected from water phase components) was used in place of the polymer-emulsion-particle (B-1). The evaluation results of the obtained member are shown in Table 1.

[Example 9]

A member was obtained in the same manner as in Example 2 except that the blending ratio in the coating composition was changed as described in Table 2. The evaluation results of the obtained member are shown in Table 2.

[Example 10]

To Water-dispersed colloidal silica (trade name "SNOWTEX OS", manufactured by Nissan Chemical Industries, Ltd., solid content of 20% by mass) having an average particle diameter of 8 nm as a starting material for a spherical metal oxide (A), 20% ethanol water was added according to a blending ratio described in Table 2. Next, the polymer-emulsion-particle (B-1) synthesized in Synthesis Example 1 was added, and then a tetramethoxysilane oligomer MS56 (trade name, manufactured by Mitsubishi Chemical Corporation, described as "MS56" in Tables) was finally added as an alkoxysilane (C). The resultant mixture was stirred at room temperature for 3 hours to obtain a coating composition having a solid content of 6% by mass.
A base material (5 cm × 5 cm polycarbonate) was coated with the polymer-emulsion-particle (B-1) as an intermediate layer using a spin coater so as to have a film thickness of 100 nm, then dried at 80°C for 10 minutes, and further dried at 120°C for 10 minutes to provide an intermediate layer on the base material.
Next, the base material with the intermediate layer was coated with the coating composition using a dip coater so as to have a film thickness of 500 nm, thereafter dried at 25°C for 5 minutes, then dried at 130°C for 10 minutes, and further, subjected to aging under an environment of a humidity of 40% RH and a temperature of 30°C for 24 hours to obtain a member. The evaluation results of the obtained member are shown in Table 2.

[Example 11]

A member was obtained in the same manner as in Example 2 except that the blending ratio in the coating composition was changed as described in Table 2. The evaluation results of the obtained member are shown in Table 2.

[Example 12]

A coating composition was obtained in the same manner as in Example 1. Next, a base material (5 cm × 5 cm polycarbonate) was coated with the coating composition using a dip coater so as to have a film thickness of 500 nm and was then dried at 25°C for 24 hours to obtain a member. The evaluation results of the obtained member are shown in Table 2.

[Comparative Example 1]

To Water-dispersed colloidal silica (trade name "SNOWTEX OXS", manufactured by Nissan Chemical Industries, Ltd., solid content of 10% by mass) having an average particle diameter of 5 nm as a starting material for a spherical metal oxide (A), 20% ethanol water was added according to a blending ratio described in Table 2. Next, the polymer-emulsion-particle (B-1) synthesized in Synthesis Example 1 was added, and then a tetramethoxysilane oligomer MS56 (trade name, manufactured by Mitsubishi Chemical Corporation, described as "MS56" in Tables) was finally added as an alkoxysilane (C). The resultant mixture was stirred at room temperature for 3 hours to obtain a coating composition having a solid content of 6% by mass.
A base material (5 cm × 5 cm polycarbonate) was coated with the coating composition using a dip coater so as to have a film thickness of 500 nm, thereafter dried at 25°C for 5 minutes, then dried at 130°C for 10 minutes, and further, subjected to aging under an environment of a humidity of 40% RH and a temperature of 30°C for 24 hours to obtain a member. The evaluation results of the obtained member are shown in Table 2.

[Comparative Example 2]

To Water-dispersed colloidal silica (trade name "SNOWTEX O40", manufactured by Nissan Chemical Industries, Ltd., solid content of 20% by mass) having an average particle diameter of 25 nm as a starting material for a spherical metal oxide (A), 20% ethanol water was added according to a blending ratio described in Table 2. Next, the polymer-emulsion-particle (B-1) synthesized in Synthesis Example 1 was added, and then a tetramethoxysilane oligomer MS56 (trade name, manufactured by Mitsubishi Chemical Corporation, described as "MS56" in Tables) was finally added as an alkoxysilane (C). The resultant mixture was stirred at room temperature for 3 hours to obtain a coating composition having a solid content of 6% by mass.

A base material (5 cm × 5 cm polycarbonate) was coated with the coating composition using a dip coater so as to have a film thickness of 500 nm, thereafter dried at 25°C for 5 minutes, then dried at a temperature of 130°C for 10 minutes, and further, subjected to aging under an environment of a humidity of 40% RH and a temperature of 30°C for 24 hours to obtain a member. The evaluation results of the obtained member are shown in Table 2.

[Comparative Example 3]

A base material (5 cm × 5 cm polycarbonate) was coated with a fluorine-based resin (trade name "CYTOP CTX-807M", manufactured by Asahi Glass Co., Ltd.) using a spin coater so as to have a film thickness of 500 nm, then dried at 80°C for 30 minutes, and next, subjected to aging at 120°C for 60 minutes to obtain a member. The evaluation results of the obtained member are shown in Table 2.

[Comparative Example 4]

The polymer-emulsion-particle (B-3) synthesized in Synthesis Example 3, and water-dispersed colloidal silica (trade name "SNOWTEX O") having an average particle diameter of 15 nm as a starting material for a spherical metal oxide (A) were mixed in this order according to a blending ratio described in Table 2. The resultant mixture was stirred, and finally, the solid content was adjusted with 20% ethanol water so as to be 6% to obtain a coating composition.

A base material (5 cm × 5 cm polycarbonate) was coated with the coating composition using a dip coater so as to have a film thickness of 500 nm and was then dried at 25°C for 1 week to obtain a member. The evaluation results of the obtained member are shown in Table 2.

[Comparative Example 5]

To water-dispersed colloidal silica (trade name "SNOWTEX OS (described as "ST-OS" in Tables), manufactured by Nissan Chemical Industries, Ltd., solid content of 20% by mass) having an average particle diameter of 8 nm as a starting material for a spherical metal oxide (A), 20% ethanol water was added according to a blending ratio described in Table 2, next, the polymer-emulsion-particle (B-1) synthesized in Synthesis Example 1 was added, and then tetraethoxysilane (manufactured by Shin-Etsu Chemical Co., Ltd., trade name "KBE-04", described as "TEOS" in Tables) was finally added as an alkoxysilane (C). The resultant mixture was stirred at room temperature only for 10 minutes to obtain a coating composition having a solid content of 6% by mass. Subsequently, a base material (5 cm × 5 cm polycarbonate) was immediately coated with the coating composition using a dip coater so as to have a film thickness of 500 nm, thereafter dried at 25°C for 5 minutes, then dried at 130°C for 10 minutes, and further, subjected to aging under an environment of a humidity of 40% RH and a temperature of 30°C for 24 hours to obtain a member. The evaluation results of the obtained member are shown in Table 2.

The evaluation results of Examples and Comparative Examples are shown in Table 1 and Table 2 below.

[Table 1]

| | | Example 1 | Example 2 | Example 3 | Example 4 | Example 5 | Example 6 | Example 7 | Example 8 |
|---|---|---|---|---|---|---|---|---|---|
| Base material | | PC | PC | PC | PC | PC | PC | PC | PC |
| Intermediate layer | | - | - | - | - | - | - | SF150 | - |
| Metal oxide (A) | (A1) | ST-OS | ST-OS | ST-OS | ST-O | ST-OS | ST-OXS | ST-OS | ST-OS |
| | Average particle diameter (nm) | 8 | 8 | 8 | 15 | 8 | 5 | 8 | 8 |
| | (A2) | - | - | - | - | - | STO-40 | - | - |
| | Average particle diameter (nm) | - | - | - | - | - | 25 | - | - |
| Polymer-emulsion-particle (B) | Kind | B-1 | B-1 | B-1 | B-3 | B-2 | B-1 | B-1 | B-4 |
| | (Physical property 1) Number average particle diameter | 40 | 40 | 40 | 180 | 130 | 40 | 40 | 100 |
| Alkoxysilane (C) | | TEOS | MS56 | MS56 | MS56 | MS56 | MS56 | MS56 | MS56 |
| A(A1/A2)/B/C | | 100/100/161 | 100/100/161 | 100/100/52 | 50/100/52 | 100/100/161 | 30/70/100/52 | 100/100/52 | 100/100/161 |
| A(A1/A2)/B'/C' | | 100/100/45 | 100/100/90 | 100/100/30 | 50/100/30 | 100/100/90 | 30/70/100/30 | 100/100/30 | 100/100/90 |
| (Physical property 3) Surface roughness | Rz (nm) | 80 | 85 | 90 | 300 | 80 | 120 | 90 | 250 |
| | Ra (nm) | 8.0 | 6.0 | 9.0 | 9.0 | 5.0 | 9.0 | 9.0 | 5.0 |
| | Ra/Rz | 0.1 | 0.071 | 0.1 | 0.03 | 0.0625 | 0.075 | 0.1 | 0.02 |
| (Physical property 4) Water contact angle (°) | | 14 | 10 | 5.0 | 14 | 14 | 5.0 | 5.0 | 15 |
| (Physical property 5) Abundance of hydroxy group | | 0.06 | 0.06 | 0.08 | 0.03 | 0.04 | 0.06 | 0.06 | 0.04 |
| (Physical property 6) Porosity | (%) | 15 | 12 | 15 | 18 | 12 | 19 | 15 | 12 |
| (Evaluation 1) Antifouling property | | ○ | ○ | ○ | ○ | ○ | ○ | ○ | ○ |
| (Evaluation 2) Adhesiveness | | ◎ | ◎ | ◎ | ◎ | ◎ | ◎ | ◎ | ◎ |

(continued)

| | | Example 1 | Example 2 | Example 3 | Example 4 | Example 5 | Example 6 | Example 7 | Example 8 |
|---|---|---|---|---|---|---|---|---|---|
| (Evaluation 3) Snow sliding property 1 | 5°C | 5.0 | 5.0 | 10 | 25 | 20 | 10 | 10 | 20 |
| | 20°C | 5.0 | 5.0 | 5.0 | 5.0 | 5.0 | 5.0 | 5.0 | 5.0 |
| (Evaluation 4) Snow sliding property 2 | | ○ | ○ | ○ | Δ | Δ | ○ | ○ | Δ |
| (Evaluation 5) Antifogging property | | ○ | ○ | ○ | ○ | ○ | ○ | ○ | ○ |

[Table 2]

| | Example 9 | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|
| Base material | PC | PC | PC | PC | PC | PC | PC | PC | PC |
| Intermediate layer | - | B-1 | - | - | - | - | - | - | - |
| Metal oxide (A) (A1) | ST-OS | ST-OS | ST-OS | ST-OS | ST-OXS | STO-40 | - | ST-O | ST-OS |
| Average particle diameter (nm) | 8 | 8 | 8 | 8 | 5 | 25 | - | 15 | 8 |
| (A2) | - | - | - | - | - | - | - | - | - |
| Average particle diameter (nm) | - | - | - | - | - | - | - | - | - |
| Polymer-emulsion-particle (B) Kind | B-1 | B-1 | B-1 | B-1 | B-1 | B-2 | CTX807M | B-3 | B-1 |
| (Physical property 1) Number average particle diameter | 40 | 40 | 40 | 40 | 40 | 130 | - | 180 | 40 |
| Alkoxysilane (C) | TEOS | MS56 | TEOS | TEOS | MS56 | MS56 | - | - | TEOS |
| A(A1/A2)/B/C | 200/100/161 | 100/100/52 | 30/100/161 | 100/100/161 | 100/10/161 | 30/100/161 | - | 100/80/0 | 100/100/161 |
| A(A1/A2)/B'/C' | 200/100/45 | 100/100/30 | 30/100/45 | 100/100/45 | 100/10/90 | 30/100/90 | - | 100/80/0 | 100/100/45 |
| (Physical property 3) Rz (nm) | 18 | 90 | 70 | 36 | 4.0 | 320 | 4.0 | 600 | 800 |
| Ra (nm) | 8.0 | 9.0 | 8.0 | 4.0 | 5.0 | 5.0 | 3.0 | 15.0 | 20.0 |
| Surface roughness Ra/Rz | 0.444 | 0.100 | 0.114 | 0.11 | 1.250 | 0.016 | 0.75 | 0.025 | 0.025 |
| (Physical property 4) Water contact angle (°) | 3.0 | 5.0 | 50 | 8.0 | 19 | 8.0 | 95 | 20 | 60 |

| | | Example 9 | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|
| (Physical property 5) Abundance of hydroxy group | | 0.04 | 0.06 | 0.02 | 0.05 | 0.01 | 0.02 | 0.01 | 0.01 | 0.01 |
| (Physical property 6) Porosity | (%) | 10 | 15 | 19 | 14 | 12 | 18 | 2 | 18 | 18 |
| (Evaluation 1) Antifouling property | | Δ | ◯ | Δ | Δ | Δ | Δ | × | Δ | × |
| (Evaluation 2) Adhesiveness | | ◯ | ◎ | ◯ | Δ | × | × | ◯ | Δ | × |
| (Evaluation 3) Snow sliding property | 5°C | 20 | 10 | 80 | 5 | 90 | 60 | 90 | 30 | 80.0 |
| | 20°C | 5 | 5 | 45 | 5 | 45 | 30 | 90 | 20 | 60.0 |
| (Evaluation 4) Snow sliding property 2 | | Δ | ◯ | × | Δ | × | × | × | × | × |
| (Evaluation 5) Antifogging property | | ◯ | ◯ | × | ◯ | Δ | ◯ | × | Δ | × |

EP 3 315 571 B1

In Table 1 and Table 2, "A(A1/A2)/B/C" represents the mass ratio (blending ratio) of respective components, the metal oxide (A), the polymer-emulsion-particle (B), and the alkoxysilane (C) base on the total amount (100% by mass) of the coating composition. In addition, "A(A1/A2)/B'/C'" represents a calculation value of the mass ratio (content ratio) of respective components, the metal oxide (A), the condensate (B') of the polymer-emulsion-particle (B), the condensate (C') of the alkoxysilane (C) based on the total amount (100% by mass) used when the coating film is made.

<Hard Coat Film>

Various physical properties and evaluation thereof with respect to the hard coat films in the following Production Examples were measured and evaluated by the following methods.

(1) Average Particle Diameter [nm]

A transmission type microscope (TEM) photograph was taken by magnifying the metal oxide (A) 50,000 to 100,000 times and adjusting the microscope so that 100 to 200 particles of the spherical metal oxide (A) were able to be photographed. Subsequently, the particle diameters (major axis diameters and minor axis diameters) of the respective metal oxides (A) photographed were measured, and the average value thereof ((major axis diameter + minor axis diameter)/2) was determined to be used as the average particle diameter.

(2) Film Thickness [$\mu$m]

A starting material composition for a hard coat film, the composition coating the base material, (hereinafter, referred to as "coating composition") was converted to a hard coat film, and then the film thickness of the hard coat film was measured using an optical film thickness meter (manufactured by Spectra Co-op., item number: MHAA-100W).

(3) Haze [%]

Haze (degree of cloudiness) was measured for each test plate (base material and hard coat film) produced in Examples and Comparative Examples, which will be mentioned later, using a haze meter NDH 2000 manufactured by NIPPON DENSHOKU INDUSTRIES CO., LTD. of Japan in accordance with JIS K7136.

(4) Micro-Hardness Test

Micro-hardness was measured by the indentation test (test conditions; indenter: Vickers quadrangular pyramid diamond indenter, loading condition: 1 mN/20 sec, creep: 5 sec, unloading condition: -1 mN/20 sec, measured load range of 0.4 mN to 1 mN, measuring 200 points at even intervals during loading and during unloading and 10 points at even intervals during creep) using FISCHERSCOPE (model number: H-100CS) manufactured by FISCHER INSTRUMENTS K.K., and the following expressions (3) to (6) were calculated with a load in a range of 0.4 mN to 1 mN to work out the maximum indentation $h_{max}$ and the elastic recovery ratio $W_{ER}$.

Here, the energy used for deforming the coating film by $h_{max}$ (initial plastic deformation energy: $E_{p, initial}$) is given by the following expression (3), wherein the indentation of the coating film obtained when the load is applied to the coating film from 0 (zero) to F with an indenter is represented by $h_{max}$.

$$E_{p, initial} = \int_0^{hmax} F_1(h) \qquad (3)$$

Thereafter, when the amount of deformation returns to $h_{min}$ after the unloading (load of 0), the energy (elastic recovery energy: $E_e$) used while the amount of deformation returns from $h_{max} \Rightarrow h_{min}$ is given by the following expression (4).

$$E_e = \int_{hmax}^{hmin} F_2(h) \qquad (4)$$

Accordingly, the energy $E_p$ eventually used for the plastic deformation in this micro-hardness test is given by the following expression (5).

$$E_p = E_{p, \text{initial}} - E_e \qquad (5)$$

The elastic recovery ratio $W_{ER}$ represents the proportion of the energy used for elastic recovery in the total energy consumed in the micro-hardness test and is given by the following expression (6).

$$W_{ER} = E_e / (E_e + E_p) \qquad (6)$$

(5) Number Average Particle Diameter of Polymer-emulsion-particle

The number average particle diameter of each polymer particle (C) obtained by Synthesis Examples, which will be mentioned later, was measured with a dynamic light scattering type particle size distribution measuring apparatus (manufactured by NIKKISO CO., LTD., trade name Microtrack UPA).

(6) Scratch Resistance

The hard coat film surface was rubbed by 5 times of reciprocation by hand with steel wool (#0), and then after the powder of the steel wool adhered to the surface was removed with tissue paper or dry air, the haze of the test plate after the test was measured by the method described in "(3) Haze [%]" to evaluate the scratch resistance of the coating film from the amount of change in haze before and after the steel wool test in the following manner. The pressure applied when the hard coat film was rubbed with the steel wool was 130 to 150 gf/cm$^2$, and the speed was about 1 cm/sec.

Amount of change in haze≤5.0 ... Evaluation of scratch resistance "○"
Amount of change in haze>5.0 ... Evaluation of scratch resistance "×"

(7) Antifogging Property

The coating film face of each hard coat film obtained in Production Examples, which will be mentioned later, was exposed to 80°C steam for 10 seconds, and the degree of cloudiness was then visually decided to evaluate the antifogging property according to the following criteria.

○: Good (no cloudiness)
Δ: Cloudiness occurs partially
×: Cloudiness occurs

[Preparation of Polymer Emulsion (B)]

Hereinafter, synthesis examples of each polymer-emulsion-particle used in Examples and Comparative Examples, which will be mentioned later, will be described.

<Synthesis of Water Dispersion of Polymer-emulsion-particle (B-5)>

In a reactor provided with a reflux condenser, a drop tank, a thermometer, and a stirring apparatus, 410 g of ion-exchanged water and 22 g of a 10% dodecylbenzenesulfonic acid aqueous solution were placed, and the resultant mixture was then heated to 80°C under stirring to obtain a mixed liquid (1).
As a core layer, a mixed liquid (2) containing 65 g of dimethyl dimethoxysilane and 37 g of phenyl trimethoxysilane (b1-3) was dropped into the obtained mixed liquid (1) in about 2 hours in a state where the temperature in the reaction container was kept at 80°C to obtain a mixed liquid (3). Thereafter, the mixed liquid (3) was stirred for about 1 hour in a state where the temperature in the reaction container was 80°C.
Next, as a shell layer, a mixed liquid (4) containing 50 g of butyl acrylate, 90 g of diethylacrylamide, 120 g of tetraethoxysilane (b1-3), 50 g of phenyl trimethoxysilane (b1-3), and 1.3 g of 3-methacryloxypropyl trimethoxysilane and a mixed liquid (5) containing 3 g of acrylic acid, 8 g of a reactive emulsifying agent (trade name "ADEKA REASOAP SR-1025", manufactured by Asahi Denka Co., Ltd., aqueous solution having solid content of 25% by mass), 33 g of a 2% by mass aqueous solution of ammonium persulfate, and 1000 g of ion-exchanged water were simultaneously dropped into the obtained mixed liquid (3) in about 2 hours in a state where the temperature in the reaction container was kept at 80°C to obtain a mixture (6). Further, as heat aging, the mixture (6) was stirred for about 2 hours in a state where the temperature in the reaction container was 80°C.

Thereafter, the mixture (6) was cooled to room temperature and then filtrated with a 100-mesh wire netting, and the concentration was adjusted with purified water to obtain a water dispersion (solid content of 14% by mass, pH of 3.2) of a polymer-emulsion-particle (B-5) having a number average particle diameter of 60 nm.

<Synthesis of Water Dispersion of Polymer-emulsion-particle (B-6)>

In a reactor provided with a reflux condenser, a drop tank, a thermometer, and a stirring apparatus, 1040 g of ion-exchanged water and 60 g of a 10% dodecylbenzenesulfonic acid aqueous solution (LIPON LH-200, manufactured by Kao Corporation) were placed, and the resultant mixture was then heated to 80°C under stirring to obtain a mixed liquid (1).

A mixed liquid (2) containing 0.4 g of methyl trimethoxysilane, 17 g of dimethyl dimethoxysilane, and 11 g of phenyl trimethoxysilane (b1-3) was dropped into the obtained mixed liquid (1) in about 2 hours in a state where the temperature in the reaction container was kept at 80°C to obtain a mixed liquid (3). Thereafter, the mixed liquid (3) was stirred for about 1 hour in a state where the temperature in the reaction container was 80°C.

Next, as a shell layer, a mixed liquid (4) containing 11 g of butyl acrylate, 59 g of diethylacrylamide, 4 g of acrylic acid, 3.0 g of a reactive emulsifying agent (trade name "ADEKA REASOAP SR-1025", manufactured by Asahi Denka Co., Ltd., aqueous solution having solid content of 25% by mass), 30 g of a 2% by mass aqueous solution of ammonium persulfate, and 900 g of ion-exchanged water was simultaneously dropped into the obtained mixed liquid (3) in about 2 hours in a state where the temperature in the reaction container was kept at 80°C to obtain a mixture (5). Further, as heat aging, the mixture (5) was stirred for about 2 hours in a state where the temperature in the reaction container was 80°C.

Thereafter, the mixture (5) was cooled to room temperature and then filtrated with a 100-mesh wire netting, and the concentration was adjusted with purified water to obtain a water dispersion (solid content of 6.2% by mass, pH of 3.2) of a polymer-emulsion-particle (B-6) having a number average particle diameter of 19 nm.

[Production Example 1]

"B-5" prepared above as a polymer emulsion (B), water-dispersed colloidal silica "A-1" (trade name "SNOWTEX OXS" (ST-OXS), manufactured by Nissan Chemical Industries, Ltd., solid content of 10% by mass, average particle diameter of 5 nm) as a metal oxide (A), and tris-(trimethoxysilylpropyl) isocyanurate (trade name "KBM 9659", manufactured by Shin-Etsu Chemical Co., Ltd.) as an alkoxysilane (C) were mixed according to a mass ratio of the solid contents (mass ratio of A:C:B) described in Table 3.

A base material (polycarbonate plate manufactured by Takiron Co., Ltd., (item number:1600, thickness: 2 $\mu$m)) was coated with the coating composition obtained in the manner as described above using a bar coater so as to have a thickness of 6.0 $\mu$m and was then dried at 130°C for 30 minutes to obtain a hard coat film.

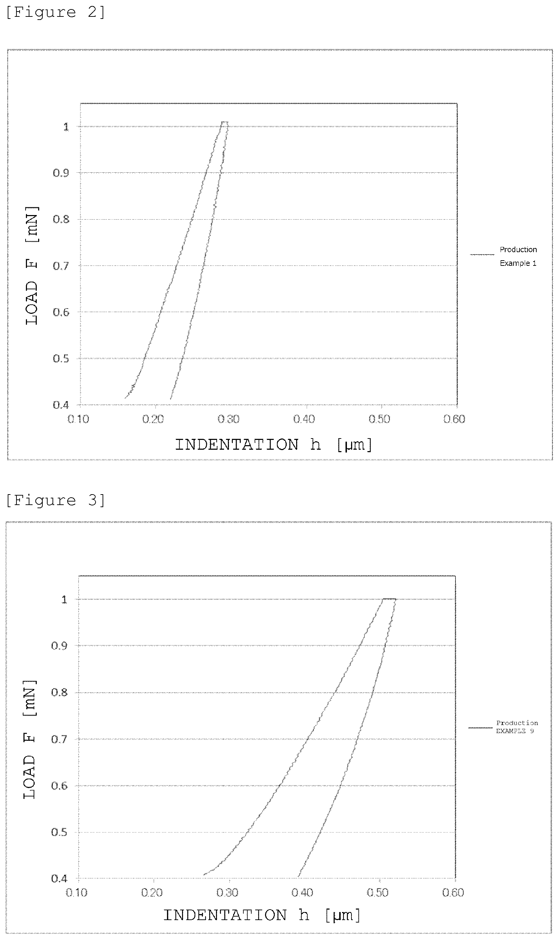

On that occasion, the composition ratio (same as mass ratio of respective components calculated in terms of solid content of coating composition) in the coating film was (A)/(C)/(B) = 100/100/100. The evaluation results are shown in Table 3. In addition, an F-h curve obtained by conducting the micro-hardness test is shown in Figure 2.

[Production Example 2]

A hard coat film was obtained in the same manner as in Production Example 1 except that the metal oxide (A) was changed to water-dispersed colloidal silica "A-2" (trade name "SNOWTEX OS" (ST-OS), manufactured by Nissan Chemical Industries, Ltd., solid content of 20% by mass, average particle diameter of 8 to 11 nm). The evaluation results are shown in Table 3.

[Production Example 3]

A hard coat film was obtained in the same manner as in Example 13 except that the alkoxysilane (C) was changed to 1,6-bis(trimethoxysilyl)hexane (trade name "KBM-3066", manufactured by Shin-Etsu Chemical Co., Ltd.). The evaluation results are shown in Table 3.

[Production Example 4]

A hard coat film was obtained in the same manner as in Production Example 1 except that the polymer particle (B) was not used. The evaluation results are shown in Table 3.

[Production Example 5]

A hard coat film was obtained in the same manner as in Production Example 1 except that the polymer-emulsion-particle (B) was changed to "B-6" prepared above. The evaluation results are shown in Table 3.

[Production Example 6]

A hard coat film was obtained in the same manner as in Production Example 1 except that the alkoxysilane (C) was changed to methyl trimethoxysilane (trade name "KBM-13", manufactured by Shin-Etsu Chemical Co., Ltd.). The evaluation results are shown in Table 3.

[Production Example 7]

A hard coat film was obtained in the same manner as in Production Example 1 except that the alkoxysilane (C) was changed to tetraethoxysilane (trade name "KBE-04", manufactured by Shin-Etsu Chemical Co., Ltd.), and further, the composition ratio of (C) was changed as shown in Table 3. The evaluation results are shown in Table 3.

[Production Example 8]

The surface of one side of the same base material as in Production Example 1 was coated with AD-1 (Super-Excel primer manufactured by HIGASHI NIPPON TORYO Co., LTD.) as a tacky adhesive layer with a spray and was dried under an environment of 25°C and 50% RH for 24 hours. Thereafter, a hard coat film was obtained in the same manner as in Production Example 1 except that the base material was changed to the base material with the tacky adhesive layer, and further, the composition ratio of (C) was changed as shown in Table 3. The evaluation results are shown in Table 3.

[Production Example 9]

A hard coat film was obtained in the same manner as in Production Example 1 except that the alkoxysilane (C) was changed to 3-glycidoxypropyl trimethoxysilane (trade name "KBM-403", manufactured by Shin-Etsu Chemical Co., Ltd.). The evaluation results are shown in Table 3. In addition, an F-h curve obtained by conducting the micro-hardness test is shown in Figure 3.

[Table 3]

| | Production Example 1 | Production Example 2 | Production Example 3 | Production Example 4 | Production Example 5 | Production Example 6 | Production Example 7 | Production Example 8 | Production Example 9 |
|---|---|---|---|---|---|---|---|---|---|
| Metal oxide (A) | ST-OXS | ST-OS | ST-OXS | ST-OXS | ST-OXS | ST-OXS | ST-OXS | ST-OXS | ST-OXS |
| Hydrolyzable silicon compound (C) | KBM9659 | KBM9659 | KBM3066 | KBM9659 | KBM9659 | KBM13 | KBE04 | KBM9659 | KBM403 |
| Polymer-emulsion-particle (B) | B-5 | B-5 | B-5 | - | B-6 | B-5 | B-5 | B-5 | B-5 |
| Composition ratio of (A) | 100 | 100 | 100 | 100 | 100 | 100 | 100 | 100 | 100 |
| Composition ratio of (C) | 100 | 100 | 100 | 100 | 100 | 100 | 10 | 10 | 100 |
| Composition ratio of (B) | 100 | 100 | 100 | 0 | 100 | 100 | 100 | 100 | 100 |
| Base material | PC | PC | PC | PC | PC | PC | PC | PC | PC |
| (2) Film thickness [$\mu$m] | 5.0 | 5.0 | 5.0 | 2.8 | 4.6 | 7.6 | 4.2 | 3.0 | 4.8 |
| (3) Haze [%] | 1.3 | 0.8 | 8.3 | 0.6 | 1.3 | 1.5 | 2.3 | 1.2 | 1.0 |
| (4) hmax | 0.42 | 0.37 | 0.31 | 0.23 | 0.28 | 0.29 | 0.44 | 0.37 | 0.39 |
| (4) WER | 0.56 | 0.54 | 0.72 | 0.70 | 0.69 | 0.64 | 0.51 | 0.56 | 0.45 |
| (5) Number average particle diameter of polymer-emulsion-particle | 60 nm | 60 nm | 60 nm | 60 nm | 40 nm | 19 nm | 60 nm | 40 nm | 60 nm |
| (6) Scratch resistance | ○ | ○ | ○ | ○ | ○ | ○ | ○ | ○ | × |
| (7) Antifogging property | Δ | Δ | Δ | × | Δ | Δ | Δ | Δ | Δ |

EP 3 315 571 B1

33

[Example 13]

A coating composition was obtained according to a blending ratio described in Table 4 in the same manner as in Example 1. Next, a base material (5 cm × 5 cm polycarbonate) was coated with the coating composition using a dip coater so as to have a film thickness of 500 nm and was then dried at 25°C for 24 hours to obtain a member. The evaluation results of the obtained member are shown in Table 4.

[Example 14]

A coating composition was obtained according to a blending ratio described in Table 4 in the same manner as in Example 1. Next, a base material (5 cm × 5 cm polycarbonate) was coated with the coating composition using a dip coater so as to have a film thickness of 500 nm and was then dried at 25°C for 24 hours to obtain a member. The evaluation results of the obtained member are shown in Table 4.

[Comparative Example 6]

A coating composition was obtained according to a blending ratio described in Table 4 in the same manner as in Example 1. Next, a base material (5 cm × 5 cm polycarbonate) was coated with the coating composition using a dip coater so as to have a film thickness of 500 nm and was then dried at 25°C for 24 hours to obtain a member. The evaluation results of the obtained member are shown in Table 4.

[Table 4]

| | | Example 13 | Example 14 | Comparative Example 6 |
|---|---|---|---|---|
| Base material | | PC | PC | PC |
| Intermediate layer (hard coat layer) | | - | - | - |
| Metal oxide (A) | (A1) | ST-OXS | ST-OXS | ST-OXS |
| | Average particle diameter (nm) | 5 | 5 | 5 |
| | (A2) | - | - | - |
| | Average particle diameter (nm) | - | - | - |
| Polymer-emulsion-particle (B) | Kind | B-1 | B-1 | B-1 |
| | (Physical property 1) Number average particle diameter | 40 | 40 | 40 |
| Alkoxysilane (C) | | MS56 | MS56 | MS56 |
| A(A1/A2)/B/C | | 100/100/71 | 100/100/53 | 100/100/17.8 |
| A(A1/A2)/B'/C' | | 100/100/40 | 100/100/30 | 100/100/10 |
| (Physical property 3) Surface roughness | Rz (nm) | 200 | 300 | 400.0 |
| | Ra (nm) | 8.0 | 6.0 | 5.0 |
| | Ra/Rz | 0.04 | 0.020 | 0.013 |
| (Physical property 4) Water contact angle (°) | | 9 | 8 | 7 |
| (Physical property 5) Abundance of hydroxy group | | 1.2 | 1.5 | 2.4 |
| (Physical property 6) Porosity | (%) | 19 | 19 | 35 |
| (Evaluation 1) Antifouling property | | ○ | ○ | × |
| (Evaluation 2) Adhesiveness | | ◎ | ◎ | × |
| (Evaluation 3) Snow sliding property 1 | 5°C | 7.0 | 8.0 | 15.0 |
| | 20°C | 5.0 | 5.0 | 5.0 |
| (Evaluation 4) Snow sliding property 2 | | ○ | ○ | × |

(continued)

| | Example 13 | Example 14 | Comparative Example 6 |
|---|---|---|---|
| (Evaluation 5) Antifogging property | ○ | ○ | ○ |

<Stacking of Hard Coat Layer/Antifouling Layer>

[Example 15]

The upper portion of the hard coat layer obtained in Production Example 2 was coated using a dip coater with a coating composition obtained in the same manner as in Example 1 so as to have a film thickness of 500 nm and was then dried at 25°C for 24 hours to obtain a member. The evaluation results of the obtained member are shown in Table 5.

[Example 16]

The upper portion of the hard coat layer obtained in Production Example 3 was coated using a dip coater with a coating composition obtained in the same manner as in Example 1 so as to have a film thickness of 500 nm and was then dried at 25°C for 24 hours to obtain a member. The evaluation results of the obtained member are shown in Table 5.

[Table 5]

| | | Example 15 | Example 16 |
|---|---|---|---|
| Base material | | PC | PC |
| Intermediate layer (hard coat layer) | | Production Example 2 | Production Example 3 |
| Metal oxide (A) | (A1) | ST-OS | ST-OS |
| | Average particle diameter (nm) | 8 | 8 |
| | (A2) | - | - |
| | Average particle diameter (nm) | - | - |
| Polymer-emulsion-particle (B) | Kind | B-1 | B-1 |
| | (Physical property 1) Number average particle diameter | 40 | 40 |
| Alkoxysilane (C) | | TEOS | TEOS |
| A(A1/A2)/B/C | | 100/100/161 | 100/100/161 |
| A(A1/A2)/B'/C' | | 100/100/45 | 100/100/45 |
| (Physical property 3) Surface roughness | Rz (nm) | 80 | 80 |
| | Ra (nm) | 8.0 | 8.0 |
| | Ra/Rz | 0.1 | 0.1 |
| (Physical property 4) Water contact angle (°) | | 14 | 14 |
| (Physical property 5) Abundance of hydroxy group | | 0.06 | 0.06 |
| (Physical property 6) Porosity | (%) | 15 | 15 |
| (Evaluation 1) Antifouling property | | ○ | ○ |
| (Evaluation 2) Adhesiveness | | ◎ | ◎ |
| (Evaluation 3) Snow sliding property 1 | 5°C | 5.0 | 5.0 |
| | 20°C | 5.0 | 5.0 |
| (Evaluation 4) Snow sliding property 2 | | ○ | ○ |

(continued)

|  | Example 15 | Example 16 |
|---|---|---|
| (Evaluation 5) Antifogging property | ○ | ○ |

Industrial Applicability

The coating film according to the present invention can be used for various kinds of outdoor members to which snow can be adhered. The coating film according to the present invention has industrial applicability particularly to functional members included in the display boards for outdoor use and resin windows in addition to LED signals, LED head lamps, and LED lenses which are hard to generate heat from the viewpoint of reduction of snow removal work and of safety.

**Claims**

1.  A coating film comprising:

    a metal oxide;
    a polymer particle; and
    an alkoxysilane
    wherein the metal oxide is a colloidal silica and the coating film has a ten-point average roughness, determined in accordance with JIS B 0601(1994), of 5 nm or more and 300 nm or less.

2.  The coating film according to claim 1, wherein the coating film has a ratio of an arithmetic average roughness, determined in accordance with JIS B 0601(1994), to the ten-point average roughness of 0.0 or more and 3.0 or less.

3.  The coating film according to claim 1 or 2, wherein the coating film has a water contact angle of 40° or less.

4.  The coating film according to any one of claims 1 to 3, wherein a coating film surface has an abundance of a hydroxy group of 0.03 or more and 0.2 or less.

5.   The coating film according to any one of claims 1 to 4, wherein the coating film has a porosity of less than 20%.

6.  The coating film according to any one of claims 1 to 5, wherein the metal oxide has an average particle diameter of 1.0 nm or larger and 400 nm or smaller.

7.  The coating film according to any one of claims 1 to 6, wherein the polymer particle has an average particle diameter of 10 nm or larger and 800 nm or smaller.

8.  The coating film according to any one of claims 1 to 7, wherein the coating film is obtained by coating at least one surface of a base material with a coating composition comprising the metal oxide and a polymer-emulsion-particle and then drying the coating composition.

9.  The coating film according to any one of claims 1 to 8, wherein the coating film is in direct contact with a base material and comprises at least one intermediate layer on a surface being in direct contact with the base material.

10. The coating film according to claim 9, wherein the intermediate layer comprises at least one selected from the group consisting of urethane resins, acrylic urethane resins, cationic resins, and acrylic silicone resins.

11. The coating film according to claim 9, wherein:

    the intermediate layer comprises a hard coat layer; and
    the hard coat layer comprises the metal oxide.

12. The coating film according to claim 11, wherein the hard coat layer further comprises a multifunctional silane having 3 to 20 atomic groups represented by formula (1) in one molecule:

$$R^1_n SiX_{3-n}A- \qquad (1);$$

wherein:

$R^1$ represents hydrogen, or an alkyl group, alkenyl group, or alkynyl group having 1 to 10 carbon atoms, or an aryl group, and further, these substituents each optionally have a halogen group, a hydroxy group, a mercapto group, an amino group, a (meth)acryloyl group, or an epoxy group;
X represents a hydrolyzable group;
n is an integer of 0 to 2; and
A represents a moiety comprising 2 to 20 methylene groups, optionally comprising a substituent on the methylene groups.

13. The coating film according to any one of claims 1 to 12 for snow accretion-preventing use or antifogging use.

14. A process for producing the coating film according to any one of claims 1 to 13, the process comprising:

a coating step of conducting coating with a coating composition comprising a metal oxide, an alkoxysilane and a polymer-emulsion-particle, wherein the metal oxide is a colloidal silica;
a drying step of conducting drying at 5.0°C or higher and 80°C or lower; and
an aging step of conducting aging under an environment of 30°C or higher and 150°C or lower and a humidity of 40%RH or higher and 100%RH or lower.

15. The process for producing the coating film according to claim 14, wherein the coating step is a step of conducting coating by a spray coating method, or a step of coating both surfaces of a base material simultaneously by a DIP coating method.

16. Use of a coating composition comprising a metal oxide which is a colloidal silica, an alkoxysilane and a polymer-emulsion-particle, the use being for imparting a snow accretion-preventing property.

17. A functional member comprising:

a base material; and
the coating film according to any one of claims 1 to 13 on the base material.

18. The functional member according to claim 17, for use of setting an installation angle at 10° or more and 140° or less to a ground surface.

19. The functional member according to claim 17 or 18, wherein the base has a non-planar shape.

20. A member for outdoor use comprising the functional member according to any one of claims 17 to 19 and selected from the group consisting of an LED signal, an LED headlamp, a lens for an LED, a headlamp, and a display board for outdoor use.


**Patentansprüche**

1. Beschichtungsfilm, umfassend:

ein Metalloxid;
ein Polymerpartikel; und
ein Alkoxysilan,
wobei das Metalloxid ein kolloidales Siliciumdioxid ist und der Beschichtungsfilm eine durchschnittliche Zehn-Punkt-Rauhigkeit, bestimmt gemäß JIS B 0601(1994), von 5 nm oder mehr und 300 nm oder weniger aufweist.

2. Beschichtungsfilm nach Anspruch 1, wobei der Beschichtungsfilm ein Verhältnis einer arithmetischen Durchschnittsrauhigkeit, bestimmt gemäß JIS B 0601(1994), zu der durchschnittlichen Zehn-Punkt-Rauhigkeit von 0,0 oder mehr und 3,0 oder weniger aufweist.

3. Beschichtungsfilm nach Anspruch 1 oder 2, wobei der Beschichtungsfilm einen Wasserkontaktwinkel von 40° oder weniger aufweist.

4. Beschichtungsfilm nach einem der Ansprüche 1 bis 3, wobei eine Beschichtungsfilmoberfläche eine Häufigkeit einer Hydroxygruppe von 0,03 oder mehr und 0,2 oder weniger aufweist.

5. Beschichtungsfilm nach einem der Ansprüche 1 bis 4, wobei der Beschichtungsfilm eine Porosität von weniger als 20% aufweist.

6. Beschichtungsfilm nach einem der Ansprüche 1 bis 5, wobei das Metalloxid einen durchschnittlichen Teilchendurchmesser von 1,0 nm oder größer und 400 nm oder kleiner aufweist.

7. Beschichtungsfilm nach einem der Ansprüche 1 bis 6, wobei das Polymerpartikel einen durchschnittlichen Teilchendurchmesser von 10 nm oder größer und 800 nm oder kleiner aufweist.

8. Beschichtungsfilm nach einem der Ansprüche 1 bis 7, wobei der Beschichtungsfilm durch Beschichten mindestens einer Oberfläche eines Basismaterials mit einer Beschichtungszusammensetzung, die das Metalloxid und ein Polymer-Emulsions-Partikel enthält, und anschließendes Trocknen der Beschichtungszusammensetzung erhalten wird.

9. Beschichtungsfilm nach einem der Ansprüche 1 bis 8, wobei der Beschichtungsfilm in direktem Kontakt mit einem Basismaterial ist und mindestens eine Zwischenschicht auf einer Oberfläche aufweist, die in direktem Kontakt mit dem Basismaterial ist.

10. Beschichtungsfilm nach Anspruch 9, wobei die Zwischenschicht mindestens eines aus der Gruppe umfasst, die aus Urethanharzen, Acryl-Urethan-Harzen, kationischen Harzen und Acryl-Silicon-Harzen besteht.

11. Beschichtungsfilm nach Anspruch 9, wobei:

   die Zwischenschicht eine Hartschicht umfasst; und
   die Hartschicht das Metalloxid umfasst.

12. Beschichtungsfilm nach Anspruch 11, wobei die Hartschicht weiterhin ein multifunktionelles Silan mit 3 bis 20 Atomgruppen der Formel (1) in einem Molekül umfasst:

$$R^1{}_nSiX_{3-n}A- \qquad (1);$$

wobei:

   $R^1$ Wasserstoff oder eine Alkylgruppe, Alkenylgruppe oder Alkinylgruppe mit 1 bis 10 Kohlenstoffatomen oder eine Arylgruppe darstellt und weiterhin diese Substituenten jeweils optional eine Halogengruppe, eine Hydroxygruppe, eine Mercaptogruppe, eine Aminogruppe, eine (Meth)acryloylgruppe oder eine Epoxygruppe aufweisen;
   X für eine hydrolysierbare Gruppe steht;
   n eine ganze Zahl von 0 bis 2 ist; und
   A für eine Einheit steht, die 2 bis 20 Methylengruppen umfasst und gegebenenfalls einen Substituenten an den Methylengruppen aufweist.

13. Beschichtungsfilm nach einem der Ansprüche 1 bis 12 zur Verwendung für das Verhindern des Anwachsens von Schnee oder als Antibeschlagmittel.

14. Verfahren zur Herstellung des Beschichtungsfilms nach einem der Ansprüche 1 bis 13, wobei das Verfahren umfasst:

   einen Beschichtungsschritt, bei dem ein Beschichten mit einer Beschichtungszusammensetzung, die ein Metalloxid, ein Alkoxysilan und ein Polymer-Emulsionspartikel, wobei das Metalloxid ein kolloidales Siliciumdioxid ist, umfasst, durchgeführt wird;
   einen Trocknungsschritt, bei dem ein Trocknen bei 5,0°C oder höher und 80°C oder niedriger durchgeführt wird; und

ein Alterungsschritt, bei dem ein Altern unter einer Umgebung von 30°C oder höher und 150°C oder niedriger und einer Luftfeuchtigkeit von 40% relativer Feuchte oder höher und 100% relativer Feuchte oder niedriger durchgeführt wird.

15. Verfahren zur Herstellung des Beschichtungsfilms nach Anspruch 14, wobei der Beschichtungsschritt ein Schritt ist, bei dem das Beschichten mittels eines Sprühbeschichtungsverfahren durchgeführt wird, oder ein Schritt des gleichzeitigen Beschichtens beider Oberflächen eines Basismaterials mittels eines tauchbeschichtungsverfahrens.

16. Verwendung einer Beschichtungszusammensetzung, umfassend ein Metalloxid, das ein kolloidales Siliciumdioxid ist, ein Alkoxysilan und ein Polymer-Emulsionspartikel, zum Versehen mit einer Eigenschaft des Verhinderns einer Scneeanhäufung.

17. Funktionales Bauteil, mit:

einem basismaterial; und
dem Beschichtungsfilm nach einem der Ansprüche 1 bis 13 auf dem Basismaterial.

18. Funktionales Bauteil nach Anspruch 17, zur Verwendung für die Einstellung eines Installationswinkels von 10° oder mehr und 140° oder weniger gegenüber einer Bodenoberfläche.

19. Funktionselement nach Anspruch 17 oder 18, wobei die Basis eine nicht ebene Form hat.

20. Bauteil/Element zur Verwendung im Freien, das das funktionale Bauteil nach einem der Ansprüche 17 bis 19 umfasst und aus der Gruppe ausgewählt ist, die aus einem LED-Signal, einem LED-Scheinwerfer, einer Linse für eine LED, einem Scheinwerfer und einer Anzeigetafel zur Verwendung im Freien besteht.

## Revendications

1. Film de revêtement, comprenant:

un oxyde de métal;
une particule de polymère; et
un alcoxysilane,
dans lequel l'oxyde de métal est une silice colloïdale, et le film de revêtement présente une rugosité moyenne en dix points, déterminée conformément à la norme JIS B 0601 (1994), égale à 5 nm, ou plus, et à 300 nm, ou moins.

2. Film de revêtement selon la revendication 1, dans lequel le film de revêtement présente un rapport entre une rugosité moyenne arithmétique, déterminée conformément à la norme JIS B 0601 (1994), et la rugosité moyenne en dix points égal à 0,0, ou plus, et à 3,0, ou moins.

3. Film de revêtement selon la revendication 1 ou 2, dans lequel le film de revêtement présente un angle de contact avec l'eau égal à 40°, ou moins.

4. Film de revêtement selon l'une quelconque des revendications 1 à 3, dans lequel une surface de film de revêtement présente une abondance d'un groupe hydroxy de 0,03, ou plus, et de 0,2, ou moins.

5. Film de revêtement selon l'une quelconque des revendications 1 à 4, dans lequel le film de revêtement présente une porosité inférieure à 20 %.

6. Film de revêtement selon l'une quelconque des revendications 1 à 5, dans lequel l'oxyde de métal présente un diamètre de particule moyen égal à 1,0 nm, ou plus, et à 400 nm, ou moins.

7. Film de revêtement selon l'une quelconque des revendications 1 à 6, dans lequel la particule de polymère présente un diamètre de particule moyen égal à 10 nm, ou plus, et à 800 nm, ou moins.

8. Film de revêtement selon l'une quelconque des revendications 1 à 7, dans lequel le film de revêtement est obtenu en revêtant au moins une surface d'un matériau de base avec une composition de revêtement comprenant l'oxyde de métal et une particule d'émulsion de polymère et en séchant ensuite la composition de revêtement.

9. Film de revêtement selon l'une quelconque des revendications 1 à 8, dans lequel le film de revêtement est en contact direct avec un matériau de base et comprend au moins une couche intermédiaire sur une surface qui se trouve en contact direct avec le matériau de base.

10. Film de revêtement selon la revendication 9, dans lequel la couche intermédiaire comprend au moins une résine sélectionnée dans le groupe comprenant des résines d'uréthane, des résines d'uréthane acryliques, des résines cationiques et des résines de silicone acryliques.

11. Film de revêtement selon la revendication 9, dans lequel la couche intermédiaire comprend une couche de revêtement dur; et la couche de revêtement dur comprend l'oxyde de métal.

12. Film de revêtement selon la revendication 11, dans lequel la couche de revêtement dur comprend en outre un silane multifonctionnel comprenant de 3 à 20 groupes atomiques représenté par la formule (1) dans une molécule:

$$R^1_n SiX_{3-n}A-\qquad(1),$$

dans laquelle:

$R^1$ représente l'hydrogène, ou un groupe alkyle, un groupe alcényle ou un groupe alcynyle comprenant de 1 à 10 atomes de carbone, ou un groupe aryle et, en outre, ces substituants comprennent optionnellement chacun un groupe halogène, un groupe hydroxy, un groupe mercapto, un groupe amino, un groupe (méth)acryloyle ou un groupe époxy;
X représente un groupe hydrolysable;
n est un entier de 0 à 2; et
A représente une fraction comprenant de 2 à 20 groupes méthylènes, comprenant optionnellement un substituant aux groupes méthylènes.

13. Film de revêtement selon l'une quelconque des revendications 1 à 12 pour une utilisation de prévention d'accrétion de neige ou pour une utilisation anti-condensation.

14. Procédé de production du film de revêtement selon l'une quelconque des revendications 1 à 13, le procédé comprenant:

une étape de revêtement pour réaliser un revêtement avec une composition de revêtement comprenant un oxyde de métal, un alcoxysilane et une particule d'émulsion de polymère, dans lequel l'oxyde de métal est une silice colloïdale;
une étape de séchage pour réaliser un séchage à 5,0°C, ou plus, et à 80°C, ou moins; et
une étape de vieillissement pour réaliser un vieillissement dans un environnement de 30°C, ou plus, et de 150°C, ou moins, et une humidité de 40 % RH, ou plus, et de 100 % RH, ou moins.

15. Procédé de production du film de revêtement selon la revendication 14, dans lequel l'étape de revêtement est une étape pour réaliser un revêtement en utilisant un procédé de revêtement par pulvérisation, ou une étape de revêtement des deux surfaces d'un matériau de base simultanément en utilisant un procédé de revêtement par immersion.

16. Utilisation d'une composition de revêtement comprenant un oxyde de métal, qui est une silice colloïdale, un alcoxysilane et une particule d'émulsion de polymère, l'utilisation étant destinée à conférer une propriété d'empêchement d'accrétion de neige.

17. Elément fonctionnel, comprenant:

un matériau de base; et
le film de revêtement selon l'une quelconque des revendications 1 à 13 sur le matériau de base.

18. Elément fonctionnel selon la revendication 17, à utiliser pour le réglage d'un angle d'installation de 10°, ou plus, et de 140°, ou moins, par rapport à une surface de sol.

**19.** Elément fonctionnel selon la revendication 17 ou 18, dans lequel la base présente une forme non plane.

**20.** Elément pour usage extérieur, comprenant l'élément fonctionnel selon l'une quelconque des revendications 17 à 19 et sélectionné dans le groupe comprenant un signal DEL, un projecteur à DEL, une lentille pour une DEL, une lampe frontale et un tableau d'affichage pour un usage extérieur.

[Figure 1]

[Figure 2]

[Figure 3]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007069596 A
- WO 2010104146 A
- JP 7331122 A
- JP 9279056 A
- JP 10088061 A
- JP 11029722 A
- JP 2002370317 A
- JP 2011148288 A
- JP 2002180035 A
- WO 2014097309 A1
- WO 2009067414 A1
- EP 0352804 A2